# EUROPÄISCHE PATENTSCHRIFT

(11) **EP 1 603 734 B1**
(45) Veröffentlichungstag und Bekanntmachung des Hinweises auf die Patenterteilung: **21.05.2008**
(21) Anmeldenummer: 04702674.5
(22) Anmeldetag: 16.01.2004
(51) Int. Cl.: B29C 63/02

(54) **VERFAHREN UND VORRICHTUNG ZUM AUTOMATISIERTEN APPLIZIEREN VON LACKFOLIE AUF KAROSSERIETEILE UND VERWENDUNG EINES AUSGESPANNTEN HAFTKLEBEBANDES DABEI**
METHOD AND DEVICE FOR AUTOMATED APPLICATION OF LACQUER FILM ON BODYWORK PARTS AND USE OF A STRETCHED ADHESIVE STRIP
PROCEDE ET DISPOSITIF D'APPLICATION AUTOMATIQUE DE FILM DE LAQUE SUR DES PIECES DE CARROSSERIE, ET UTILISATION A CET EFFET D'UNE BANDE AUTO-ADHESIVE TENDUE

(30) Priorität: 14.03.2003 DE 10311267
(43) Veröffentlichungstag der Anmeldung: 14.12.2005
(73) Patentinhaber: Daimler AG, 70327 Stuttgart (DE)
(72) Erfinder: HABISREITINGER, Uwe, 72290 Lossburg (DE); NORDMANN, Bernhard, 71034 Böblingen (DE)
(86) Internationale Anmeldenummer: PCT/EP2004/000286
(87) Internationale Veröffentlichungsnummer: WO 2004/080696

(56) Entgegenhaltungen:
- EP-A- 1 059 157
- WO-A-01/05902
- WO-A-20/04005012
- DE-A- 10 230 034
- GB-A- 2 159 763

## Beschreibung

Die Erfindung betrifft ein Verfahren und eine Vorrichtung zum automatisierten Applizieren von Lackfolie auf Karosserieteile. Dabei geht die Erfindung von der älteren, nicht vorveröffentlichten Patentanmeldung der Anmelderin gemäß der deutschen Offenlegungsschrift DE 102 30 034 A1 aus. Ein daraus als bekannt geltendes Verfahren ist in dem Oberbegriff von Anspruch 1 und eine entsprechende Vorrichtung im Oberbegriff des Anspruchs 16 wiedergegeben. Die Erfindung betrifft ferner eine Verwendung eines Haftklebebandes.

Bei Fahrzeugen soll häufig die zwischen zwei benachbarten Glasflächen liegende Karosserieoberfläche aus stilistischen Gründen mit einer unabhängig von der sonstigen Wagenfarbe schwarz oder dunkelfarbig getönten, häufig hochglänzenden Lackfolie überklebt werden, um dadurch an dieser Stelle den Eindruck einer durchgehenden Glasfläche zu vermitteln. Und zwar kommen hier insbesondere - aber nicht nur - die beiden benachbarten vertikalen Rahmenholme der Fensterrahmen im Bereich der Mittelsäule des Fahrzeugs in Betracht. Bei Fahrzeugen mit Lamellendach oder Glasdach wird auch der horizontal liegende Karosseriestreifen oberhalb der Windschutzscheibe aus stilistischen Gründen gerne mit einer dunkel getönten Lackfolie versehen, um auch hier den optischen Eindruck einer einheitlich durchgehenden Fläche zu schaffen. Bei der Seitenapplikation der Lackfolie wird diese an den Rahmenholmen des Fensterrahmens der Seitentüren appliziert. Da diese Karosserieflächen in der Regel nur schmale streifen darstellen, ist auch der Zuschnitt der zu applizierenden Lackfolie entsprechend länglich geformt und nicht besonders groß. Nachdem die Lackfolie während der gesamten Gebrauchsdauer des Fahrzeuges an diesem verbleibt, muss die Lackfolie entsprechend dauerhaft an der Karosserie festgeklebt sein, wobei zu berücksichtigen ist, dass die so überklebten Seitenholme im unmittelbaren Sichtbereich der Fahrzeugbenutzer zumindest beim Einsteigen liegen und somit die Anforderungen an eine einwandfreie Folienapplikation besonders hoch sind.

Für das aus der eingangs genannten, älteren Patentanmeldung (DE 102 30 034 A1) bekannte, automatisierte Applikationsverfahren wird ein dafür geeigneter, dreilagiger Folienverbund vorgeschlagen, der beiderseits des eigentlichen Lackfolienzuschnittes jeweils eine flächendeckende Schutzfolie oder ein Schutzpapier trägt. Zur maschinellen Handhabung des länglichen Folienverbundes ist an dessen beiden Enden jeweils ein sog. Anfasser angebracht, d.h. die Schutzfolienstreifen stehen an den Enden über. An diesen überstehenden Anfassern wird der Folienverbund mittels steuerbarer flacher Sauggreifer eines Roboterwerkzeuges aus einer flachen Bereitstellungslage erfasst, wobei die Sauggreifer nach dem Aufnehmen des Folienverbundes aus der Aufnahmeebene herausgekippt werden. Durch das Abkippen der Sauggreifer kann der ausgespannt gehaltene, auf die Karosserie aufzurakelnde Folienverbund aus der Aufnahmeebene V-förmig herausgedrückt werden, ohne dass die Kontaktfläche an den Sauggreifern partiell freigelegt werden. An einem Ende des Folienverbundes ist darüber hinaus ein zweiter, gesonderter Anfasser für die klebeseitige Schutzfolie vorgesehen, der über den ersten Anfasser übersteht. Unter Verwendung dieses weiteren Anfassers kann die klebeseitige Schutzfolie vor der eigentlichen Lackfolienapplikation automatisiert vom Folienverbund entfernt, d.h. die Klebeseite der Lackfolie freigelegt werden.

Zwar ist es mit der Technik nach der älteren Patentanmeldung DE 102 30 034 A1 nach Wissen der Anmelderin erstmals möglich, auf Karosserieteile automatisiert Lackfolien zu applizieren, was neben dem Vorteil einer Entlastung von anstrengender und monotoner Handarbeit den weiteren, wesentlichen Vorteil einer stets lagegenauen und blasen- sowie faltenfreien Lackfolienapplikation hat. Andererseits hat sich jedoch herausgestellt, dass die ältere Technik noch folgende Nachteile aufweist:
ω Die erforderlichen Roboterwerkzeuge sind aufwändig und dementsprechend wartungsempfindlich, was sich in Investitions- und Wartungskosten niederschlägt. Nachdem wegen der mehreren Applikationsstellen an einem Fahrzeugtyp und dem Erfordernis eines Reservewerkzeuges für jede Applikationsstelle relativ viele Roboterwerkzeuge gleichzeitig benötigt werden, wird der Aufwand entsprechend höher.
ω Eine Umrüstung des Roboterwerkzeuges auf veränderte Formate des Lackfolienzuschnittes ist nur sehr eingeschränkt möglich. Die Roboterwerkzeuge könnten also nicht in einem breiteren Spektrum von Folienformaten eingesetzt werden.
ω Vakuum im Roboterwerkzeug zum Handhaben des Lackfolienverbundes ist baulich und steuerungstechnisch nicht ganz unproblematisch (große Leitungsquerschnitte, voluminöse Ventile), was das Roboterwerkzeug in der Bewegungsfreiheit einschränkt.
ω Die vorkonfektionierten Lackfolienverbunde müssen an beiden gegenüberliegenden Schmalseiten relativ lange, dreilagige "Anfasser" haben, die den gleichen Lagenaufbau haben, wie der eigentliche Lackfolienzuschnitt auch, nämlich (von unten nach oben) klebeseitiger Schutzstreifen, Lackfolie und außenseitiger Schutzstreifen. Dadurch ist jeder einzelne Lackfolienverbund relativ teuer, was sich in einem relativ hohen Materialpreis niederschlägt.
ω Das Abziehen des außenseitigen Schutzstreifens nach dem Applizieren der Lackfolie und das Deponieren dieses Schutzstreifens in einem Abfallbehälter benötigt Zeit und belastet die Taktzeit. Außerdem stellen die sich aufrollenden Schutzstreifen einen sehr voluminösen Abfall dar, der viel Platz in der Applikationsstation in Anspruch nimmt.

Die Druckschrift WO 01/05902 offenbart ein Verfahren zum automatisierten Applizieren von einer selbsthaftender Lackfolie auf ein lagedefiniert festgehaltenes Karrosserieteil, wobei die Lackfolie als vorkonfektionierter, länglicher, mehrlagiger Folienverbund mit einem darin enthaltenen Lackfolienzuschnitt vorbestimmter Form lagedefiniert im Arbeitsbereich des Industrieroboters zur Aufnahme durch das Applikationswerkzeug bereitgestellt wird. Ein Schutzstreifen ist mit einem endseitig angebrachten Anfasser versehen. Der klebeseitige Schutzstreifen wird mittels einer Abzieh-Einrichtung vom gehaltenen Folienzuschnitt abgezogen und dadurch wird die Klebeseite freigelegt. Der ausgespannte gehaltene Lackfolienzuschnitt wird über dem zu beklebenden Karosserieteil bei geringem Abstand zu ihm lagegenau ausgerichtet und wird von der Sichtseite der Lackfolie her in Gegenwart eines sichtseitigen Schutzstreifens von der applizierten Lackfolie abgezogen.

Das Applikationwerkzeug weist an seiner "Arbeitsseite" eine Aufspannebene auf, die durch zwei im Abstand zueinander angeordnete Halteorgane für den Folienverbund gebildet ist.

Aufgabe der Erfindung ist es, das gattungsgemäß zugrunde gelegte Verfahren bzw. die entsprechende Vorrichtung dahingehend zu verbessern, dass diese Nachteile vermieden werden. Aufgrund der Erfindung sollen also
ω einfachere und somit kostengünstigere Lackfolienverbunde automatisiert verarbeitet werden können,
ω die Roboterwerkzeuge einfacher und somit kostengünstiger gestaltet werden können,
ω Umrüstungen der Roboterwerkzeuge auf unterschiedliche Lackfolienformate problemlos möglich sein,
ω die Roboterwerkzeuge in ihrer Beweglichkeit nicht durch voluminöse Peripherie-Komponenten eingeschränkt sein und
ω die Volumina der als Abfall anfallenden Schutzstreifen reduziert werden.

Diese Aufgabe wird bei Zugrundelegung des gattungsgemäßen Applikationsverfahrens bzw. der entsprechenden Vorrichtung erfindungsgemäß durch die kennzeichnenden Merkmale von Anspruch 1 (Verfahren) und durch die kennzeichnenden Merkmale von Anspruch 16 (Vorrichtung) gelöst. Erfindungsgemäß wird ferner die Verwendung eines quasi-endlosen, aufgewickelten Haftklebebandes als außenseitiger Schutzstreifen beim automatisierten Aufnehmen und Applizieren selbstklebender Lackfolienzuschnitte auf Karosserieteile vorgeschlagen (Anspruch 27).

Danach wird der Lackfolienverbund durch ein im Roboterwerkzeug befindliches Haftklebeband gehandhabt. Ein in der Aufnahmeebene des Applikationswerkzeuges ausgespannt gehaltenes Klebebandteilstück kann mehrfach verwendet und bedarfsweise leicht erneuert werden. In zweckmäßiger Weise wird das Haftklebeband von einer im Werkzeug gehalterten Vorratsrolle abgezogen, über ein Paar von Umlenkrollen durch die Aufnahmeebene des Roboterwerkzeuges hindurchgeführt und nach Gebrauch auf einer ebenfalls im Werkzeug gehalterten Aufnahmerolle aufgewickelt. Dieses Klebeband übernimmt nicht nur das Festhalten der Lackfolie während der Folienapplikation, sondern ersetzt auch den bisher auf der Außenseite des Lackfolienverbundes angebrachten, äußeren Schutzstreifen. Voluminöse, die Beweglichkeit einschränkende Vakuumschläuche und Vakuumventile können aufgrund dessen entfallen. Aufwändige, kippbare Sauggreifer, die die Umrüstbarkeit des Applikationswerkzeuges auf andere Folienformate beeinträchtigen, gibt es nicht mehr. Mit dem Haftklebeband können ohne weiteres beliebige Formate von Lackfolien aufgenommen und sicher gehandhabt werden. Der neue, nur noch zweilagige Lackfolienverbund ist außerdem einfacher als bisher ausgebildet und die Lackfolie wird von dem Klebeband unmittelbar auf ihrer frei liegenden Sichtseite in das Applikationswerkzeug übernommen. Nachdem mit dem Klebeband nacheinander mehrere saubere Lackfolien aufgenommen werden können, braucht das Klebeband nicht nach jedem Applikationsvorgang erneuert zu werden, vielmehr genügt eine Erneuerung nach mehrmaligem Gebrauch. Im Fall eines quasi-endlosen Haftklebebandes kann das Erneuern intervallweise, d.h. durch Verschieben des Haftklebebandes um eine ganze Lackfolienlänge nach einer bestimmten Anzahl von Applikationsvorgängen erfolgen. Stattdessen kann das ausgespannte Haftklebeband beispielsweise auch durch ein taktweises Weiterbewegen des Klebebandes um lediglich einen kleinen Bruchteil der Lackfolienlänge nach jedem Applikationsvorgang erneuert werden. Der Verbrauch an Schutzfolie ist also wesentlich geringer als bei der alten Technologie und die verbrauchte Schutzfolie wird im Fall eines quasi-endlosen Haftklebebandes innerhalb des Roboterwerkzeuges Platz sparend aufgewickelt. Es entsteht dann in soweit kein voluminöser Müll. Der zweilagige Lackfolienverbund weist im übrigen nur noch an einem Ende des klebeseitigen Schutzstreifens einen Anfasser auf, mit dem der Schutzstreifen vom Lackfolienzuschnitt abgezogen werden kann; der Folienverbund ist also auch in soweit einfacher als bei der älteren Technologie gestaltet.

Weitere zweckmäßige Ausgestaltungen der Erfindung können den Unteransprüchen entnommen werden; im übrigen ist die Erfindung anhand verschiedener in den Zeichnungen dargestellter Ausführungsbeispiele nachfolgend noch erläutert; dabei zeigen:
- Fig. 1: eine Draufsicht auf eine Arbeitsstation zum automatisierten Applizieren von selbstklebender Lackfolie auf die Rahmenholme im Bereich der Mittelsäule von Fahrzeugseitentüren,
- Fig. 2: eine Ansicht auf ein erstes Ausführungsbeispiel eines Applikationswerkzeuges eines Roboters der Arbeitsstation nach Figur 1 kurz vor dem Übernehmen eines einzeln bereitgelegten Folienverbundes,
- Fig. 3: das Applikationswerkzeug nach Figur 2 in der Phase, nachdem es den Folienverbund aufgenommen hat und der klebeseitige Schutzstreifen abgezogen werden soll,
- Fig. 4: das Applikationswerkzeug nach Figur 3 während des Abziehens des klebeseitigen Schutzstreifens vom Folienverbund,
- Fig. 5: das Applikationswerkzeug nach Figur 2 oder 3 beim Applizieren der Lackfolie auf die Karosserie,
- Fig. 6: ein gegenüber dem Bereitstellungstisch nach den Figuren 2, 3 oder 4 modifiziertes Ausführungsbeispiel eines solchen Tisches mit seitlich gehaltenem, unterseitig unterfahrbarem Saugkasten und mit einem anderen Haltearm zum Tragen des Anfassers des klebeseitigen Schutzstreifens,
- Fig. 7, 8 und 9: drei unterschiedliche Phasen beim Applizieren der Lackfolie, und zwar Beginn (Figur 7) und Ende (Figur 8) des eigentlichen Applikationsvorganges sowie das Abziehen des im Werkzeug verbleibenden, als außenseitiger Schutzstreifen genutzten Haftklebebandes von der applizierten Lackfolie (Figur 9),
- Fig. 10: eine Ansicht auf ein zweites Ausführungsbeispiel eines Applikationswerkzeuges, bei dem die Vorratsrolle auf derjenigen Seite des in der Aufnahmeebene ausgespannten Teilstücks des Haftklebebandes angeordnet ist, an dem auch die Rakel ihren Arbeitshub beginnt, wobei das Applikationswerkzeug - wie in Figur 2 - in einer Phase kurz vor dem Übernehmen eines bereitgelegten Folienverbundes gezeigt ist,
- Fig. 11: eine Ansicht auf ein weiteres Ausführungsbeispiel eines Applikationswerkzeuges, bei dem ein endliches Klebebandteilstück zwischen zwei Spannzylinder in der Aufnahmeebene ausgespannt ist, welches gesondert und extern ausgetauscht werden muss,
- Fig. 12: eine vergrößerte Einzeldarstellung der drehantreibbaren Schnabelzange des in den Figuren dargestellten Applikationswerkzeugs mit symmetrisch beweglichen Schnabelteilen zum Fassen und Handhaben des Anfassers des Folienverbundes und zum Aufwickeln des Schutzstreifens, sowie
- Fig. 13 und 14: zwei verschiedene Ausführungsbeispiele von Folienverbunden mit bzw. ohne Lackfolie im Bereich des endseitigen Anfassers.

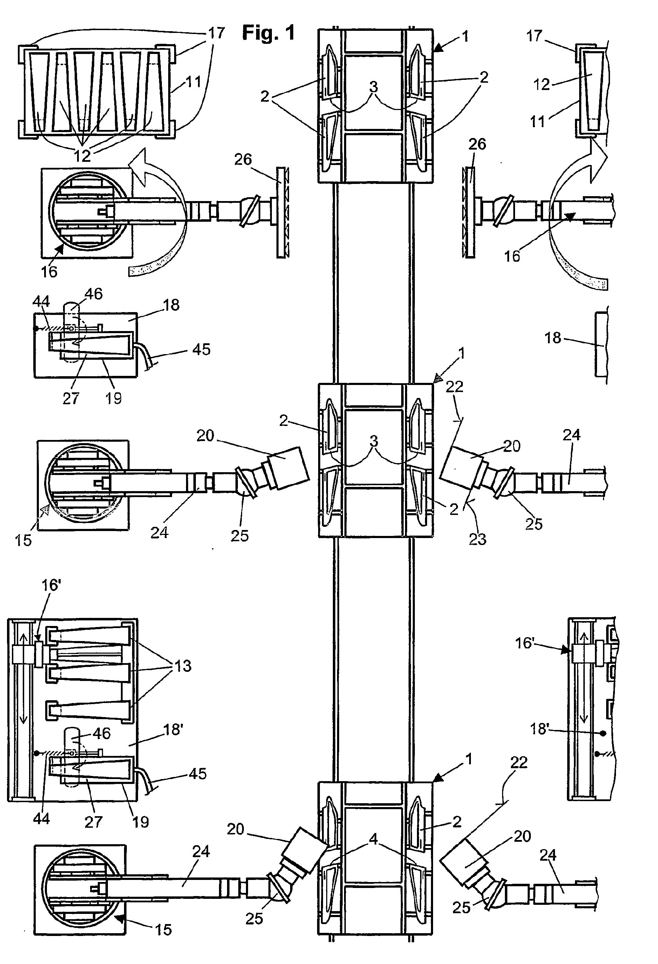

Zunächst sei auf die Gesamtübersicht einer Applikationsstation gemäß Figur 1 näher eingegangen, die jedoch lediglich als ein Ausführungsbeispiel neben vielen anderen denkbaren Varianten aufzufassen ist. Die Seitentüren 2 einer Karosserie sollen zumindest an den der mittleren Säule zugeordneten Rahmenholmen 3 bzw. 4 automatisiert mit Lackfolie beklebt werden. Dazu werden die auf Transportgestelle 1 lagedefiniert aufgespannten Seitentüren nacheinander auf Führungsschienen durch die Applikationsstation hindurchbefördert, wobei die Transportgestelle und mit ihnen die Seitentüren im Bereich der Applikationsroboter angehalten sowie lagedefiniert ausgerichtet und fixiert.werden. Beiderseits der Förderlinie sind frei programmierbare Industrieroboter zur automatisierten Durchführung des Applikationsverfahrens aufgestellt. Nur die Applikationsroboter 15 sind an ihrem Arbeitsarm 24 bzw. Handgelenk 25 mit einem Applikationswerkzeug 20 versehen. Diese nehmen von dem feststehenden, in zwei Ausführungsbeispielen gezeigten Tisch 18 bzw. 18' jeweils einen dort bereitgelegten Folienverbund auf und applizieren den darin enthaltenen Lackfolienzuschnitt auf die Rahmenholme 3 bzw. 4.

Das erfindungsgemäße Verfahren zum automatisierten Applizieren von selbsthaftender Lackfolie auf Karosserieteile setzt voraus, dass die zu applizierenden, selbstklebenden Lackfolien in Zuschnitten 6 vorkonfektioniert sind und diese Zuschnitte handhabungsgerecht gestaltet sind. Um die vorkonfektionierten Lackfolienzuschnitte 6 transportieren und automatisiert handhaben zu können, müssen diese an ihrer Klebeseite jeweils mit einem anhaftenden aber leicht ablösbaren Schutzstreifen 8 versehen, also in einem zweilagigen Folienverbund enthalten sein. Ferner ist für eine automatisierte Applikation des Lackfolienzuschnitts ein gegenüber der Nutzlänge L des Lackfolienzuschnitts 6 überstehender Anfasser 10, 10' an dem Klebeseitigen Schutzstreifen wichtig. Ein solcher ist vorliegend lediglich im Bereich einer einzigen endseitigen Schmalseite des Zuschnitts nötig, um den klebeseitigen Schutzstreifen abziehen zu können. Für die automationsgerechte Handhabung des Folienverbundes als ganzem sind jedoch keine weiteren Anfasser erforderlich.

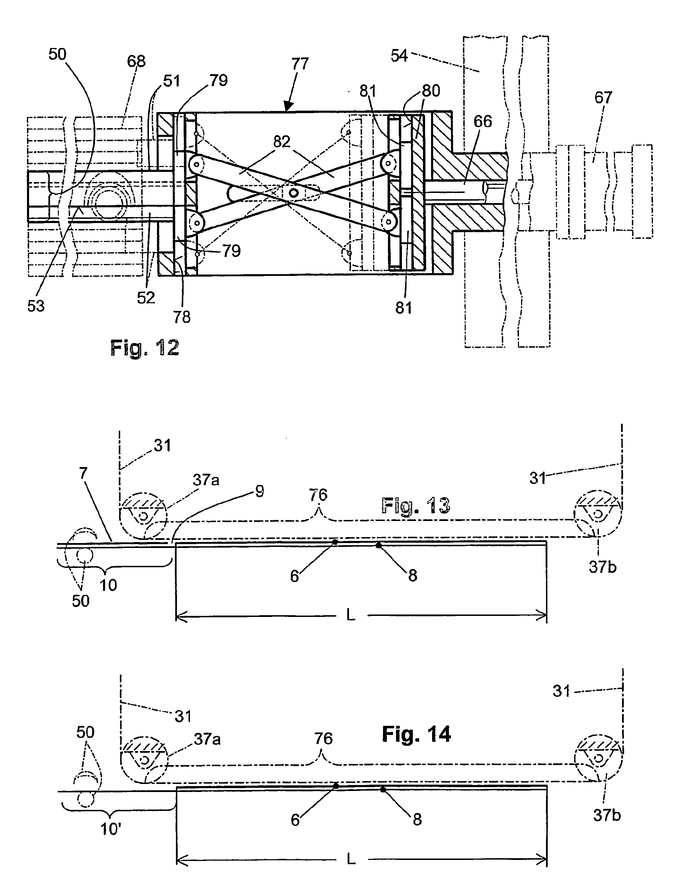

In den Zeichnungen (Figuren 13 und 14) sind zwei unterschiedliche Ausführungsformen von Folienverbunden 5 bzw. 5' dargestellt, die sich jedoch lediglich durch den einzigen, erwähnten Anfasser 10 bzw. 10' unterscheiden. Der Anfasser ist in beiden Fällen Bestandteil des klebeseitigen Schutzstreifens, der unmittelbar an die Nutzlänge L des Lackfolienzuschnitts 6 anschließt. Der Anfasser 10 nach Figur 13 ist, wie der sonstige Bereich des klebeseitigen Schutzstreifens 8, ebenfalls mit einem Lackfolienstück 7 überklebt, wobei jedoch am Übergangsbereich eine schmale Unterbrechung 9 zwischen dem Nutzteil des Lackfolienzuschnittes 6 und dem Abfallstück 7 vorgesehen ist. Dem gegenüber weist der Anfasser 10' des Folienverbundes nach Figur 14 oberseitig kein solches Abfallstück von Lackfolie auf. Der Vorteil des Folienverbundes nach Figur 13 (mit Abfallstück 7) besteht in einer über die gesamte Länge des Folienverbundes gleichmäßige Dicke, so dass diese Folienverbunde sich gut Stapeln lassen. Der Vorteil des Folienverbundes nach Figur 14 (ohne Abfallstück 7) besteht in einer besseren Flexibilität des Anfassers, so dass sich dieser in der Anfangsphase besser wickeln lässt.

Im Zusammenhang mit der erfindungsgemäßen Technik der Übernahme und Handhabung der Folienverbunde in das bzw. durch das Applikationswerkzeug muss der Folienverbund auf dem Tisch 18, 18' auf einer harten, flachen Unterlage 27 bereitgestellt sowie flachliegend darauf festgehalten werden. Deshalb können die Folienverbunde nicht im Stapel dargeboten, sondern müssen zunächst vereinzelt werden. Zu diesem Zweck ist bei dem in Figur 1 oben dargestellten Ausführungsbeispiel dem oberen Applikationsroboter 15 noch ein Bereitstellungsroboter 16 zugeordnet, dessen Arbeitsarm mit einem entsprechend ausgebildeten Sauggreifer 26 versehen ist. Der Bereitstellungsroboter entnimmt aus einem Anlieferungsbehälter 11 jeweils einen Folienverbund und legt ihn lagegenau auf den ortsfest fixierten Bereitstellungstisch 18 ab. Der formstabile Anlieferungsbehälter enthält mehrere Stapel 12 von Folienverbunden, die darin durch entsprechende Einbauten lagegenau fixiert sind. Außerdem ist der Anlieferungsbehälter aufgrund von stationsseitigen Sicherungsanschlägen 17 lagedefiniert im Arbeitsbereich des Bereitstellungsroboters aufgestellt. Dadurch und aufgrund der vorgegebenen und in die Roboterprogrammierung mit aufgenommenen Anzahl von Folienverbunden je Stapel 12 ist es dem Bereitstellungsroboter möglich, den Anlieferungsbehälter 11 selbsttätig leer zu arbeiten und die Folienverbunde nacheinander dem Applikationsroboter lagegleich bereit zu legen. Es ist dann lediglich in größeren zeitlichen Abständen erforderlich, einen leer gearbeiteten Anlieferungsbehälter gegen einen vollen auszutauschen.

Im unteren Teil von Figur 1 ist eine einfachere Vorrichtung zur Vereinzelung und Bereitstellung von Folienverbunden dargestellt, die auf dem Bereitstellungstisch 18' integriert ist. Auf diesem sind parallel nebeneinander mehrere Schächte 13 seitenversetzt zu der Unterlage 27 für die Bereitstellung eines vereinzelten Folienverbundes angeordnet, die jeweils größere Stapel von Folienverbunden aufnehmen können. Damit wäre es auch möglich, unterschiedliche Lackfolien für einen Produktionsmix zu bevorraten. Die Schächte 13 einerseits und die Unterlage 27 andererseits weisen bezüglich einer Seitenkante des Tisches untereinander den gleichen Abstand auf. Neben den Schächten und der Unterlage ist ein Umsetzer 16' mit zwei kartesischen Bewegungsachsen angeordnet, mit dem jeweils ein Folienverbund aus einem der Schächte 13 entnommen und auf der Unterlage 27 abgelegt werden kann. Zu diesem Zweck ist eine parallel zur Tischkante verlaufenden Horizontalführung für einen Schlitten mit entsprechendem Bewegungsantrieb und an dem Schlitten eine Vertikalführung für einen flachen Sauggreifer zum Aufnehmen eines Folienverbundes vorgesehen. Die Schächte 13 können eine relativ große Anzahl von Folienverbunden aufnehmen, so dass ein manuelles Nachfüllen derselben nur in größeren zeitlichen Abständen erforderlich wird.

Das lagedefinierte Darbieten des Folienverbundes zur Übernahme durch den Handhabungsroboter kann also auf unterschiedliche Weise, auch wie sie hier gar nicht beschrieben ist und auch in unterschiedlicher Lage erfolgen. Wichtig dabei ist, dass zum einen die durch mechanische Anschläge o.dgl. genau definierte Position des zu übernehmenden Folienverbundes sich beim Übernehmen nicht verändert. Darüber hinaus muss der Folienverbund auf einer harten, ebenen Unterlage aufliegen, damit er durch Aufrakeln mittels einer werkzeugintegrierten Rakel in das Applikationswerkzeug übernommen werden kann. Deshalb müssen die Folienverbunde 5 einzeln und bevorzugt in Horizontallage dem Applikationswerkzeug zur Übernahme dargeboten werden. Die zweilagigen Folienverbunde neigen nämlich wegen der ungleichen Lagen, insbesondere aufgrund der unterschiedlichen temperatur- und/oder feuchtigkeitsabhängigen Dehnung der beiden Lagen zu einem Rollen. Auch elektrostatische, zwischen dem werkzeugseitigen Haftklebeband einerseits und dem bereitgelegten Folienverbund andererseits wirksame Kräfte könnten u.U. zu einer ungewollten Lageveränderung des Folienverbundes führen.

Um trotz einer solchen Rollneigung und trotz elektrostatischer Kräfte den Folienverbund einwandfrei auf dem Tisch bereit stellen zu können, wird der Folienverbund zwangsweise in Flachlage festgehalten, was bei dem in den Figuren dargestellten Ausführungsbeispiel dadurch geschieht, dass die auf dem Tisch 18, 18' angebrachte harte Unterlage als Saugkasten 19 ausgebildet ist, der seinerseits über einen Anschluss 45 bedarfsweise, d.h. zum Festhalten mit Vakuum beaufschlagt oder zum Loslassen belüftet werden kann. Die Oberseite des Saugkastens bildet die harte ebene Unterlage 27. Damit beim Aufrakeln des werkzeugseitigen Haftklebebandes auf den festgehaltenen Folienverbund sich Bohrungsränder in der oberen Wandung des Saugkastens nicht durch den klebeseitigen Schutzstreifen 8 hindurch auf dem empfindlichen Lackfolienzuschnitt 6 abdrücken können, ist die obere Wandung des Saugkastens nur im Randbereich mit Saugbohrungen versehen, die in einem Beeich der Lackfolie liegen, der nach der Applikation ohnehin umgebugt wird.

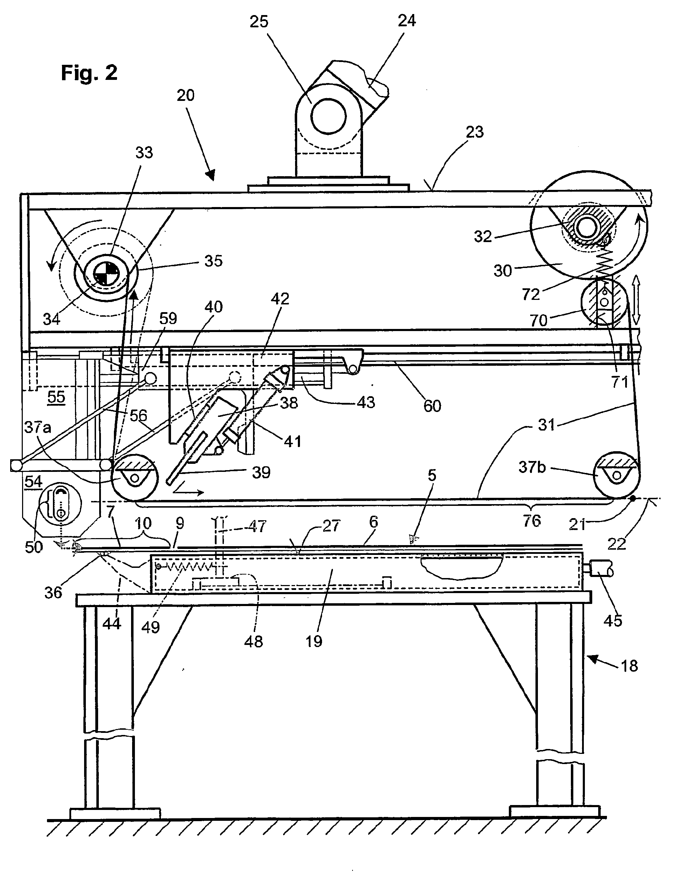

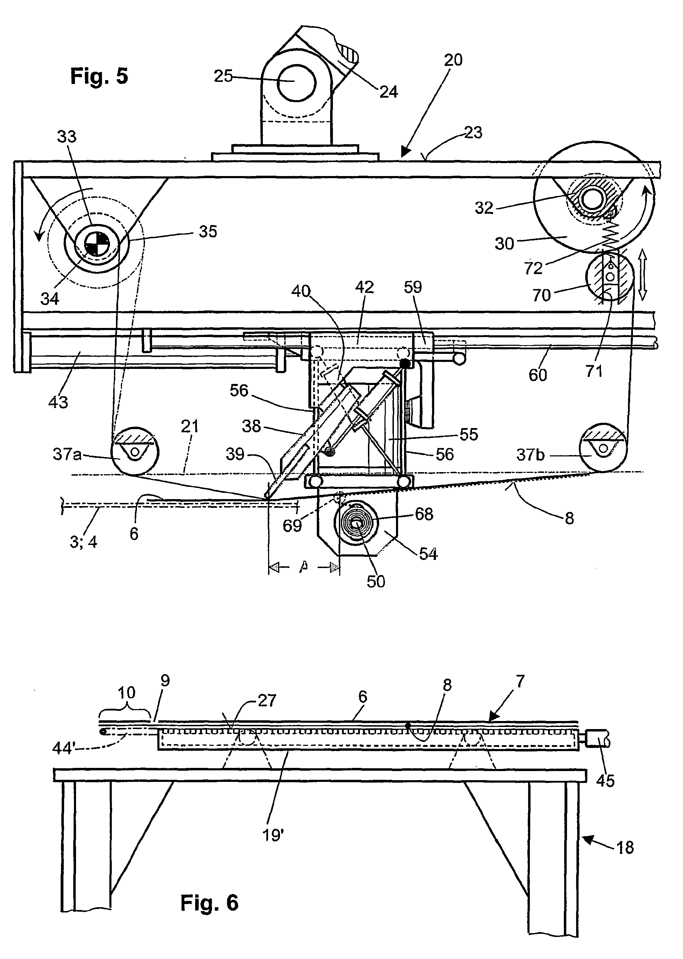

Am einen Ende des Saugkastens bzw. der Unterlage ist ein Haltearm 44 angebracht, der bei dem in den Figuren 2 bis 5 dargestellten Ausführungsbeispiel an seinem freien Ende eine kleine Saugleiste 36 trägt, die parallel zum Saugkasten mit Vakuum beaufschlagbar bzw. belüftbar ist. Die saugwirksame Oberseite der Saugleiste liegt fluchtend zur Oberseite er Unterlage 27. Durch die Saugleiste wird das äußerste Ende des Anfassers 10 bzw. 10' festgehalten, wogegen der Hauptteil des Anfassers frei ausgespannt und somit von oben und von unten sowie quer von den Seiten her durch ein Geifwerkzeug zugänglich ist. An dieser Stelle sei vorab schon erwähnt, dass bei der in Figur 6 dargestellten, einfacheren Variante des Saugkastens der Haltearm 44' lediglich als L-förmig abgewinkelter Drahtbügel ausgebildet ist, auf dessen einem, quer liegenden Schenkel das äußerste Ende des Anfassers lose aufliegt.

Bevor auf das erfindungsgemäße Verfahren zur Applikation der selbstklebenden Lackfolie eingegangen werden soll, sei zunächst das in den Figuren 2 bis 5 in unterschiedlichen Phasen gezeigte Applikationswerkzeug 20 in seinen wesentlichen Einzelheiten vorgestellt.

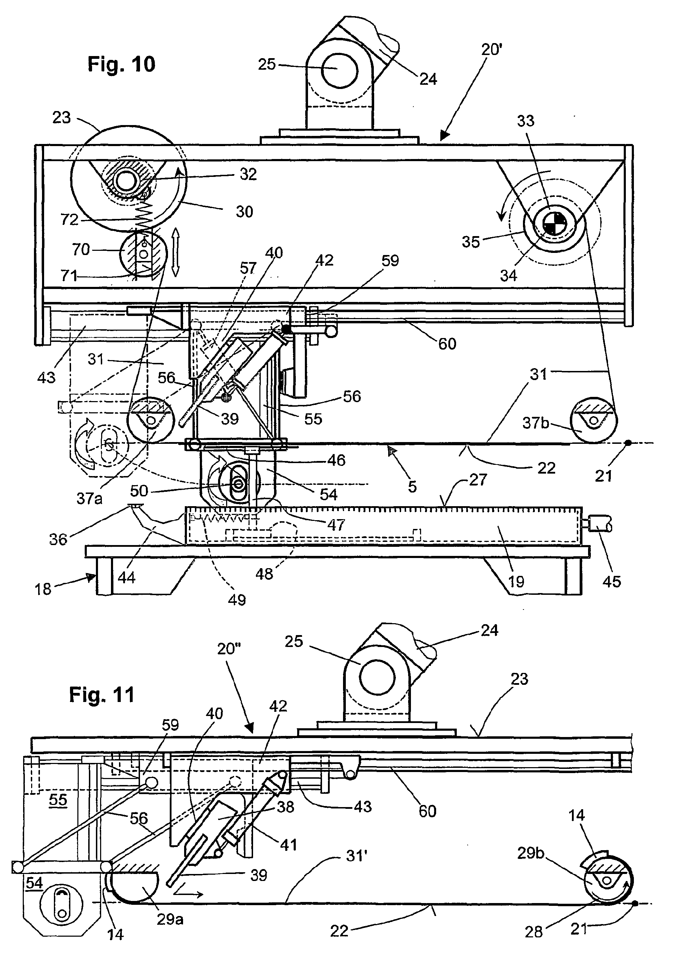

Das in unterschiedlichen Ausführungsbeispielen gezeigte Applikationswerkzeug 20 (Figuren 2 - 5), 20' (Figur 10) und 20" (Figur 11) ist an seiner Rückseite 23 mit dem Handgelenk 24 des Roboterarms befestigt, wogegen auf der gegenüberliegenden Seite des Applikationswerkzeuges dessen Arbeitsseite 22 angeordnet ist. Auf der Arbeitsseite sind parallel zu einander und in einem Abstand, der größer als die Nutzlänge L des Lackfolienzuschnitts 6 ist, zwei Umlenkrollen 37a und 37b bzw. Spannzylinder 29a, 29b für Haftklebeband 31, 31' angebracht, deren gemeinsame äußere Tangente in der Aufnahmeebene 21 liegt. Abgesehen von einer gewissen Justagemöglichkeit hinsichtlich Parallelität und einer Möglichkeit zur Abstandseinstellung zwecks Anpassung an ein anderes Folienformat sind die beiden Umlenkrollen bzw. Spannzylinder feststehend im Applikationswerkzeug gelagert. Durch die beiden Umlenkrollen wird ein Teilstück 76 eines quasi-endlosen Haftklebebandes in der Arbeitsebene mit nach unten weisender Klebeseite ausgespannt. Auf das Applikationswerkzeug 20" mit den Spannzylindern soll weiter unten kurz gesondert eingegangen werden.

Zwischen Rück- und Arbeitsseite des Applikationswerkzeuges 20, 20' sind - ebenfalls ortsfest darin - eine Vorratsrolle 30 und eine Aufnahmerolle 33 für neues bzw. verbrauchtes Haftklebeband derart gelagert, dass sie bedarfsweise rasch ausgetauscht werden können. Die Aufnahmerolle 33 ist verdrehfest auf eine durch einen Antriebsmotor 35 antreibbare Antriebswelle 34 aufgesteckt, wobei deren Antrieb insgesamt derart ausgebildet ist, dass die Aufnahmerolle 33 auch bei Stillstand mit einem voreinstellbaren Drehmoment im Sinne eines Aufwickelns des Haftklebebandes angetrieben und auch vollständig festgebremst werden kann. Die Vorratsrolle 30 ist verdrehfest auf eine Bremswelle aufgesteckt, die durch eine Bremse 32 mit vorgebbarem Bremsmoment abgebremst werden kann.

Mit Rücksicht auf die Möglichkeit eines seitlichen Schräglaufes des Haftklebebandes durch die Aufnahmeebene, was insbesondere durch das Aufrakeln des Lackfolienzuschnitts begünstigt wird, ist die Aufnahmerolle im Applikationswerkzeug axial verschiebbar gelagert, so dass sie einem u.U. seitlich verschobenen Haftklebeband zu folgen vermag. Zur Automatisierung eines geordneten Aufwickelns des verbrauchten Haftklebebandes wird in dem der Aufnahmerolle zugekehrt liegenden Endbereich der Aufnahmeebene die Lage der Seitenkante des Haftklebebandes detektiert. Außerdem ist eine servomotorische Seitenverstellung der Aufwickelrolle vorzusehen, die in Abhängigkeit vom detektierten Seitenversatz des verbrauchten Haftklebebandes angesteuert wird. Dadurch kann das verbrauchte Haftklebeband geordnet aufgewickelt werden.

Um bei Bedarf Haftklebeband auch in geringen Längen ruckfrei von der Vorratsrolle abziehen zu können, ist eine Ausgleichsrolle 70 im Ablauf des Haftklebebandes von der Vorratsrolle angeordnet, die zu etwa 90° umschlungen ist. Die in Relation zur Vorratsrolle in einer Führung 71 radial verschiebbar gelagerte Ausgleichsrolle kann den Durchmesseränderungen der Vorratsrolle, die diese in Abhängigkeit vom Verbrauch an Haftklebeband erfährt, zwanglos folgen. Die Ausgleichsrolle liegt mit einer gewissen Vorspannung am Außenumfang der Vorratsrolle an. Zu diesem Zweck ist die Ausgleichsrolle mittels einer Feder 72 in Richtung zur Vorratsrolle hin gespannt.

Aufgrund der Ausgleichsrolle 70 können auch kleinere Längen von Haftklebeband ruckfrei nach unten abgezogen werden. Für den Fall, dass das in der Aufnahmeebene 21 ausgespannte Teilstück 76 unnachgiebig oder nur unter Überwindung einer bestimmten Grenzkraft nachgiebig gehalten sein soll, sind nicht nur die Vorratsrolle selber und auch die Aufnahmerolle 33 mit einer höheren Festhaltekraft abbremsbar, sondern es kann u.U. auch die Ausgleichsrolle 70 innerhalb ihrer radialen Verschiebbarkeit 71 durch eine Bremse festgesetzt werden, was jedoch zeichnerisch nicht angedeutet ist.

Das von der Ausgleichsrolle ablaufende Trum des Haftklebebandes ist auf die erste Umlenkrolle 37b geführt und wird von ihr in die Aufnahmeebene 21 umgelenkt. Nach durchlaufen der Aufnahmeebene wird die zweite Umlenkrolle 37a erreicht, die das Haftklebeband zur Aufnahmerolle 33 umlenkt. In dem in der Aufnahmeebene 21 ausgespannten Teilstück 76 des Haftklebebandes weist dessen Klebeseite nach unten, was für die Funktion des Applikationswerkzeuges wesentlich ist.

Beim Abwickeln von Haftklebeband von der Vorratsrolle können elektrostatische Ladungen in dem abgezogenen Haftklebeband frei werden, die Staubpartikel aus der Umgebung anziehen und diese an der Oberfläche anlagern können, was beim Aufrakeln störend wäre. Um diese Gefahr zu reduzieren, ist es zweckmäßig, wenn die Ausgleichsrolle 70 oberflächlich elektrisch leitend und diesbezüglich elektrisch geerdet ist. Es ist alternativ oder zusätzlich auch denkbar, eine elektrische Ladung von dem abgezogenen Haftklebeband mittels einer schmalen geerdeten Bürste aus langen weichen, elektrisch leitenden Fasern abzuleiten und unschädlich zu machen.

Benachbart zu der einen, in den Figuren 2 bis 5 links gezeigten Umlenkrolle 37a ist im Applikationswerkzeug ferner ein parallel-verschiebbares Greifwerkzeug 50 angeordnet, welches in Figur 12 einzeln dargestellt ist. Weitere unterschiedliche Ausführungen von Greifwerkzeugen sind in der bereits erwähnten DE 102 30 034 A1 zeichnerisch dargestellt und beschrieben, die auch vorliegend zum Einsatz gelangen könnten. Bei zweien der dort gezeigten Greifwerkzeuge ist dieses als drehbar gelagerte Schnabelzange ausgebildet, mit der der endseitig ergriffene Schutzstreifen 8 zugleich auch aufgewickelt werden kann. Bei zwei weiteren in der DE 102 30 034 A1 gezeigten und beschriebenen Greifwerkzeugen ist dieses als drehantreibbare, im Querschnitt D-förmige Saugleiste ausgebildet, die ebenfalls als Wickelkern dienen kann. In jedem Fall ist das Greifwerkzeug so beweglich gelagert und mit einem entsprechenden Bewegungsantrieb versehen, dass es zum einen aufnahmebereit an die Aufnahmeebene 21 neben der linken, startseitigen Umlenkrolle 37a heran bewegt werden kann - Startposition. Zum anderen kann das Greifwerkzeug aus dieser Startposition unter die Aufnahmeebene 21 in eine Arbeitsebene des Greifwerkzeuges und innerhalb dieser Arbeitsebene parallel dazu und parallel zu sich selber verfahren werden. Auf die näheren Einzelheiten des Greifwerkzeuges selber soll weiter unten im Zusammenhang mit Figur 12 eingegangen werden. An dieser Stelle sei lediglich vermerkt, dass in allen angesprochenen Ausführungen das Greifwerkzeug drehbar gelagert und mit einem entsprechenden Drehantrieb gekoppelt ist und als Wickelkern für den endseitig erfassten klebeseitigen Schutzstreifen 8 dient. Dazu ist das Greifwerkzeug in einem seitenversetzt neben den Umlenkrollen 37a und 37b angeordneten Winkelgetriebe 54 drehbar gelagert, von dem es axial frei abragt. Das Greifwerkzeug kann zum Aufwickeln über den Antriebsmotor 55 und das Winkelgetriebe gezielt in Drehung versetzt werden.

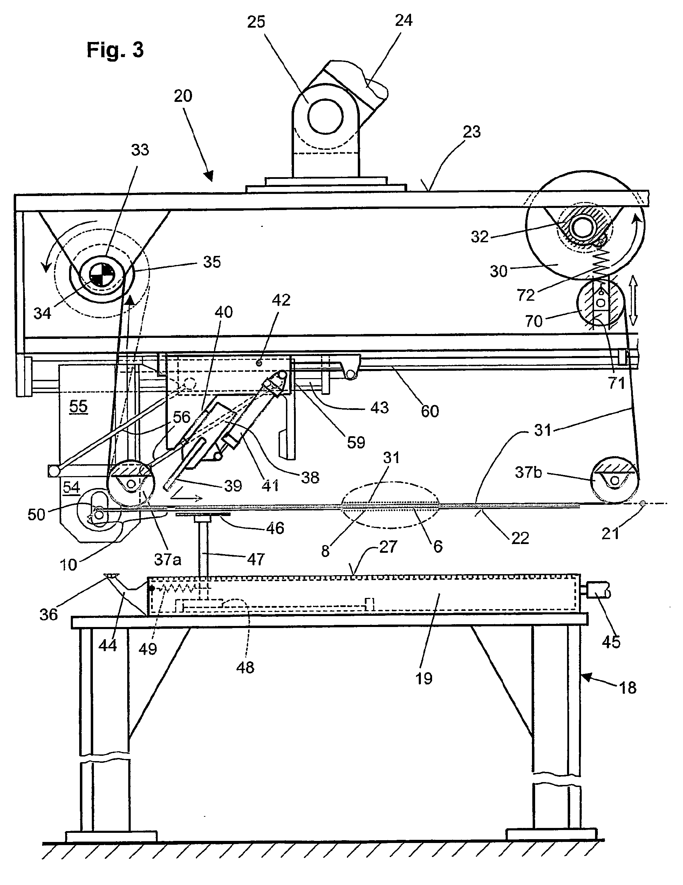

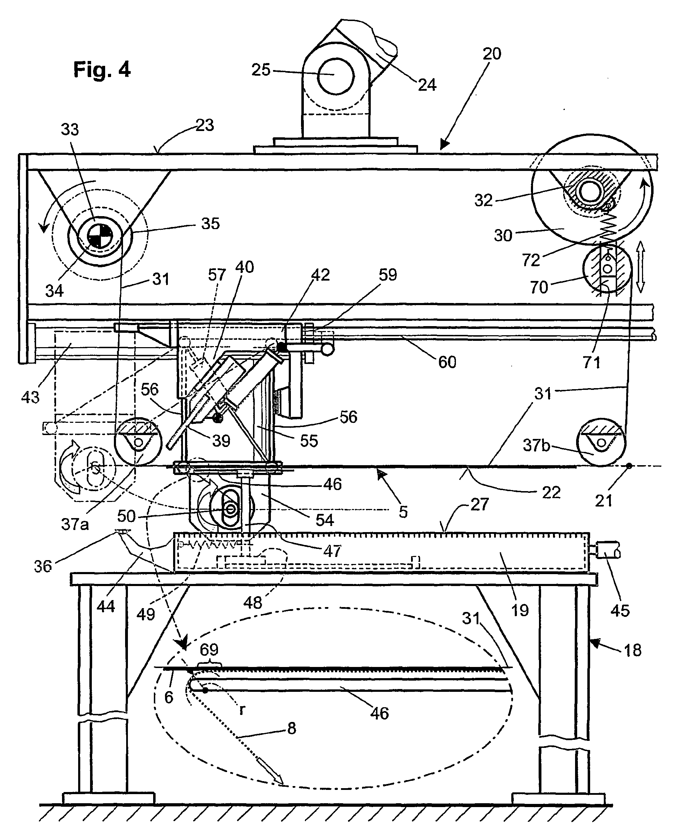

Der aus Winkelgetriebe 54 und Motor 55 bestehende Antriebsblock des Greifwerkzeuges ist beim dargestellten Ausführungsbeispiel mittels Parallelogrammlenker 56 an einem Schlitten 59 angekoppelt, so dass der Antriebsblock bzw. die Schnabelzange auf einem Kreisbogen translatorisch aus der in den Figuren 2 und 3 dargestellten sowie in Figur 4 strichpunktiert angedeuteten Startposition in die in Figur 4 in vollen Linien gezeigte Arbeitsposition verschoben werden kann. In der Startposition liegt die Schnabelzange mit ihrem Zentrum auf dem Niveau der Aufnahmeebene 21 des Applikationswerkzeuges. Demgegenüber befindet sich die Schnabelzange nach Überführung in ihre Arbeitsposition in einer Arbeitsebene unterhalb der Aufnahmeebene 21. Zum Verschieben des Antriebsblocks bzw. der Schnabelzange von der Startposition in die Arbeitsposition und umgekehrt ist ein Verschwenkantrieb 57 in Form eines Arbeitszylinders vorgesehen, der beim dargestellten Ausführungsbeispiel zwei diagonal gegenüberliegende Gelenkpunkte des Gelenkvierecks verbindet, das durch die beiden Parallelogrammlenker 56 bzw. deren Gelenke aufgespannt ist. Der Schlitten 59 ist auf Führungsstangen 60 parallel zur Aufnahmeebene 21 beweglich geführt. Durch einen am Applikationswerkzeug befestigten Verschiebeantrieb z.B. in Form eines Arbeitszylinders, dessen Kolbenstange mit dem Schlitten 59 gekoppelt ist, kann der Schlitten bzw. die Schnabelzange parallel zur Arbeitsebene 21 verschoben werden. Der Verschiebeweg des Schlittens 59 entspricht mindestens der Nutzlänge L des zu applizierenden Lackfolienzuschnitts 6.

Was die Lage des Greifwerkzeuges bzw. der Schnabelzange in Bezug auf die räumliche Tiefe relativ zur Zeichenebene der verschiedenen Darstellungen des Applikationswerkzeuges anlangt, so sei bemerkt, dass das Greifwerkzeug in dem gleichen Bereich liegt, in dem auch die bereits erwähnten Umlenkrollen 37a, 37b und das von ihnen aufgespannte Teilstück 76 des Haftklebebandes liegen. Im gleichen Bereich befindet sich auch die weiter unten beschriebene, von einem separaten Schlitten 42 getragene Rakel 39, mit der beim Aufnehmen des bereitgelegten Folienverbundes 5 das aufgespannte Teilstück 76 des Haftklebebandes auf ihn und beim Applizieren der Lackfolie diese auf die Karosserie aufgerakelt wird. Der Antriebsblock 54/55 zum Verdrehen des Greifwerkzeuges muss daher in einer Ebene jenseits von Greifwerkzeug, Umlenkrollen, Folienverbund und Schlitten 42 liegen.

Grundsätzlich wäre es auch denkbar, das bewegliche Greifwerkzeug zum endseitigen Erfassen des klebeseitigen Schutzstreifens und zum Abziehen desselben vom Folienverbund - abgesehen vom Wechsel des Greifwerkzeuges aus der Startposition in die Arbeitsebene - nur linear innerhalb der Arbeitsebene zu verschieben und auf einen aufwändigen Drehantrieb des Greifwerkzeuges zu verzichten. Dies würde aber zumindest bei dem Wunsch nach einem werkzeugintegrierten, applikations-simultanen Abziehen des Schutzstreifens voraussetzen, dass der Linearhub des solcherart geführten Greifwerkzeuges mindestens dem Doppelten der Länge L des zu applizierenden Lackfolienzuschnittes entspricht; außerdem müsste das solcherart geführte Greifwerkzeug mit der doppelten Geschwindigkeit wie der des Schlittens 42, der die Rakel 38/39 führt, angetrieben werden. Dies würde eine erhebliche bauliche Länge des Applikationswerkzeuges voraussetzen, was letzteres schwer und unhandlich macht. Deshalb ist in den dargestellten Ausführungsbeispielen das beweglich gelagerte Greifwerkzeug - wie gesagt - zugleich als Wickelvorrichtung ausgebildet, so dass es mit der gleichen Geschwindigkeit wie die Rakel 38/39 bewegt werden kann, gleichwohl aber erlaubt, den klebeseitigen Schutzstreifen applikationssimultan von der Lackfolie abzuziehen.

Als weitere verfahrenswesentliche bauliche Komponente der Applikationswerkzeuge 20, 20' bzw. 20" ist die bereits erwähnte, innerhalb des Applikationswerkzeuges angeordnete Rakel 38, 39 zu nennen, die sowohl beim Aufnehmen des Folienverbundes als auch in der eigentlichen Applikationsphase in Aktion tritt. Sie ist in zweifacher Hinsicht beweglich angeordnet und mit einem entsprechenden Verschiebeantrieb versehen. Zum einen kann die Rakel mit ihrer Arbeitskante aus einer von der Aufnahmeebene 21 abgerückten, in den Figuren 2, 3 und 4 dargestellten Warteposition aus in eine nahe bei der Aufnahmeebene 21 liegende, in Figur 5 gezeigte Arbeitsposition verschoben und in der Arbeitsposition mit bestimmter Kraft auf die Unterlage 27 (Aufnehmen) bzw. an das mit der Lackfolie zu applizierende Karosserieteil 3 bzw. 4 angepresst werden. Um einerseits über die gesamte Rakelbreite einen möglichst gleichmäßig hohen Liniendruck verwirklichen zu können und trotz leicht gewölbter Karosserieflächen keine Druckstellen auf der zu applizierenden Lackfolie zu hinterlassen, besteht das Rakelblatt 39 aus einem stumpf und kantig endigenden harten Filz von etwa 10 bis 20 mm Stärke und einer Dichte bzw. einem Volumengewicht von etwa 0,6 g/cm³.

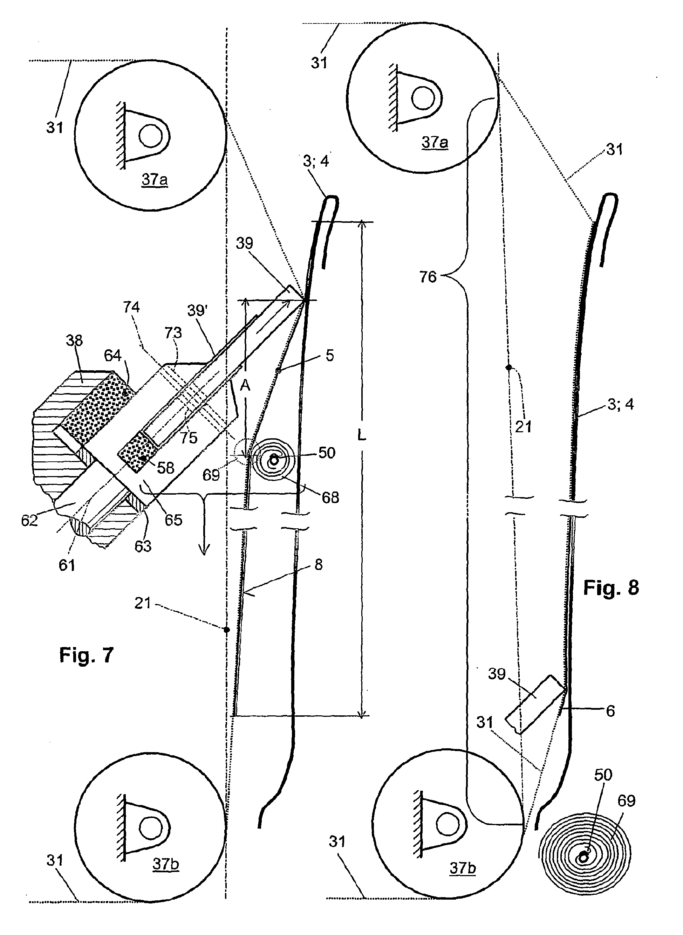

Damit das Rakelblatt unabhängig von einer werkzeugseitigen Positionierung in Relation zum Karosserieteil dessen Querneigung zwanglos zu folgen vermag, ist das Rakelblatt 39 in zweifacher Hinsicht schwenkbar im Rakelhalter 38 gehaltert, was in Figur 7 näher angedeutet ist. Das bei dem dort dargestellten Ausführungsbeispiel wesentliche oder zentrale Teil der schwenkbaren Halterung ist eine Aufnahmegabel 65, die - unter Zwischenfügung eines Drucklagerringes 63 - mit einem rückseitigen Lagerzapfen 62 in eine passgenaue Lagerbohrung des Rakelhalters 38 eingesetzt ist, wodurch eine erste Schwenkachse 61 gebildet ist, die parallel zur Zustellrichtung der Rakel liegt und ein Schwenken des Rakelblattes im Sinne einer Wankbewegung ermöglicht. Oberseitig stützt sich die Aufnahmegabel über ein zwischengefügtes elastisches Medium 64, z.B. ein Federpaar oder ein elastisches Schaumstück, an dem Rakelhalter 38 ab, wodurch die Aufnahmegabel aus einer Auslenkstellung selbsttätig in die Neutralstellung zurückgeführt wird. In den gegabelten Teil der Aufnahmegabel ist das mit einem Versteifungsblech 39' umgebene Rakelblatt 39 schwenkbar eingesetzt. Zu diesem Zweck ist die genannte Einheit 39, 39' in der Mitte gelocht und mit einer Lagerbuchse 75 versehen. An einer entsprechenden Stelle der Aufnahmegabel ist ein Lagerzapfen feststehend eingesetzt, so dass das Rakelblatt um die so geschaffene zweite Schwenkachse 74 im Sinne einer Gierbewegung schwenken kann. Innerhalb der Aufnahmegabel ist zwischen der Hinterkante des Rakelblattes und dem Grund der Gabelung ein Freiraum belassen, der nicht nur eine Schwenkbewegung zulässt, sondern der ein elastisches Medium 58 z.B. in Form eines Federpaares oder eines elastischen Schaumstoffblocks aufnimmt, mit dessen Hilfe das Rakelblatt aus einer Auslenkstellung selbsttätig in die Neutralstellung zurückgeführt werden kann.

Zum Anstellen der Rakel ist der schlittenartige Rakelhalter 38 auf einer zur Aufnahmeebene 21 geneigten Schlittenführung 40 verschiebbar gelagert und mit einem entsprechenden Anstellantrieb 41 in Form eines Arbeitszylinders versehen, der auch die Anpresskraft der Rakel aufbringt. Zum anderen kann die Rakel in der Arbeitsstellung geradlinig und parallel zur Aufnahmeebene 21 verschoben werden. Um dies zu ermöglichen, ist bei dem dargestellten Ausführungsbeispiel die Schlittenführung 40 ihrerseits auf dem bereits erwähnten Schlitten 42 angeordnet. Durch den Verschiebeantrieb 43 kann der Schlitten bzw. die Rakel 39 parallel zur Arbeitsebene 21 verschoben werden, wobei ein Rakelvorgang mit bestimmtem Liniendruck ausgeführt werden kann.

Bevor auf das Applikationsverfahren und die Wirkungsweise des Applikationswerkzeuges eingegangen wird, soll zuvor noch eine stationär neben der Unterlage 27 bzw. dem Saugkasten 19 für die Bereitstellung eines aufzunehmenden Folienverbundes angeordnete Hilfsvorrichtung zum gezielten Ablösen nur des klebeseitigen Schutzstreifens von dem in das Applikationswerkzeug aufgenommenen Folienverbund bezüglich seines Aufbaus erläutert werden. Um zu verstehen, dass vorliegend eine solche Hilfsvorrichtung sehr zweckmäßig ist, sei zum einen daran erinnert, dass der aufgenommene Lackfolienzuschnitt 6 des Folienverbundes unterseitig an einem in der Arbeitsebene 21 des Applikationswerkzeuges ausgespannten Teilstück 76 des Haftklebebandes 31 mit nur mäßiger Haftkraft anhaftet. An der gegenüberliegenden Seite des Lackfolienzuschnittes haftet der Schutzstreifen 8 an der Klebeseite des Lackfolienzuschnittes an, wobei diese Haftkraft trotz einer Antihaftbeschichtung am Schutzstreifen u.U. größer sein kann, als die Haftkraft des Haftklebebandes an der Sichtseite des Lackfolienzuschnittes, zumal das Haftklebeband mehrmals verwendet werden soll und dabei die Haftkraft von mal zu mal nachlässt. Mit der Hilfsvorrichtung soll also sichergestellt werden, dass beim Abziehen des Anfassers 10 vom aufgenommenen Folienverbund sich nur der klebeseitige Schutzstreifen 8 vom aufgenommenen Lackfolienzuschnitt löst und letzterer in jedem Fall am Haftklebeband 31 haften bleibt.

Die Hilfsvorrichtung zum gezielten Abziehen des klebeseitigen Schutzstreifens besteht im wesentlichen aus einem beweglichen Gegenhalteschwert 46, welches in einem Höhenabstand zur Unterlage 27 und parallel zu ihr gehaltert ist. Es ist mit seinem einen Ende oben an einem vertikalen Halter 47 befestigt und horizontal schwenkbar gelagert. Mittels eines nicht dargestellten Schwenkantriebes kann es aus der in Figur 1 in vollen Linien gezeigten, neben dem Saugkasten befindlichen Ruheposition um 180° in eine oberhalb des Saugkastens liegende, strichpunktiert angedeutete Arbeitsposition verschwenkt werden. Der Vollständigkeit halber sei erwähnt, dass ein Stellungswechsel von der Ruhe- in die Arbeitsposition auch durch eine verschiebbare Lagerung und Halterung des Gegenhalteschwertes erreicht werden kann. Grundsätzlich könnte die Hilfsvorrichtung zum gezielten Abziehen des klebeseitigen Schutzstreifens zwar irgend wo an einer anderen Stelle innerhalb des Arbeitsbereiches des Applikationsroboters stationär angeordnet sein, jedoch erscheint die Anordnung in der Weise wie gezeichnet und geschildert, d.h. in unmittelbarer Nachbarschaft von der Unterlage 27 in sofern von Vorteil, als keine unnötigen Wege mit dem Applikationswerkzeug zurückgelegt und keine Bewegungszeiten vertan werden müssen. Der vertikale Halter 47 der Hilfsvorrichtung ist beim dargestellten Ausführungsbeispiel seinerseits auf einem Schlitten 48 befestigt, der auf einer Schlittenführung geführt ist, die parallel zur Längserstreckung der Unterlage 27 ausgerichtet ist. Durch eine Rückzugsfeder 49 wird der Schlitten in die in den Figuren dargestellte Ausgangsstellung gezogen. Wichtig ist zum einen, dass in der Arbeitsposition des Gegenhalteschwertes eine gerundete Kante quer zur Längserstreckung des Folienverbundes 5, 5' zu liegen kommt. Ferner muss sich in der durch justierbare Anschläge bestimmten Ausgangsposition des Gegenhalteschwertes dessen gerundete Kante etwa positionsgleich zu der dem Anfasser 10, 10' zugekehrten Endkante des Lackfolienzuschnitts 6 oder etwas davor befindet. Bezüglich der Höhenlage des Gegenhalteschwertes ist wichtig, dass sich dieses in geringem Abstand unterhalb des in das Applikationswerkzeug aufgenommenen und von der Unterlage abgehobenen Folienverbundes befindet.

Beim Abziehen des klebeseitigen Schutzstreifens 8 durch das werkzeugintegrierte, bewegliche Greifwerkzeug 50 wird der Schutzstreifen über die gerundete Kante des Gegenhalteschwertes 46 hinweg gezogen, wie dies in Figur 4 im unteren Teil vergrößert dargestellt ist. Aufgrund eines gewissen, durch die Spannkraft der Feder 49 bestimmten Widerstandes, gegen den das Gegenhalteschwert 46 parallel zur Längserstreckung der Unterlage 27 ausweicht, wird der abzuziehende Schutzstreifen 8 unter Zugspannung gehalten und ihm (8) dadurch an der Umlenkstelle im Bereich der Querkante des Schwertes ein enger Krümmungsradius r aufgezwungen. Durch dieses enge Abbiegen des Schutzstreifens 8 wird erreicht, dass sich nur dieser vom aufgenommenen Lackfolienzuschnitt löst, wogegen letzterer sicher am Haftklebeband 31 haften bleibt. Nachdem der Anfang des Ablösens des Schutzstreifens vom Lackfolienzuschnitt mittels der stationären Hilfsvorrichtung sicher bewerkstelligt ist, braucht das weitere Abziehen des Schutzstreifens nicht mehr mit Unterstützung des Gegenhalteschwertes zu erfolgen. Vielmehr kann das weitere Abziehen allein durch das werkzeugintegrierte, bewegliche Greifwerkzeug 50 erfolgen.

Im Zusammenhang mit der Wirkungsweise der Applikationseinrichtung sei zunächst erwähnt, dass vorbereitend für das Applizieren der Lackfolie zunächst der durch den Bereitstellungsroboter 16 oder Umsetzer 16' auf der Unterlage 27 bzw. dem Saugkasten 19 bereitgelegte Folienverbund in das Applikationswerkzeug 20 aufgenommen werden muss. Bei dem lediglich zweilagigen, bereitgestellten Folienverbund liegt die nackte Sichtseite des Lackfolienzuschnitts 6 frei zugänglich. Zum Aufnehmen des Folienverbundes wird das Applikationswerkzeug bei geringem Abstand der Aufnahmeebene 21 oberhalb des bereitgelegte Folienverbundes gehalten und anschließend mittels der werkzeugintegrierten Rakel 39 der ausgespannte Teil 76 des Haftklebebandes aus der Abstandslage heraus auf den unnachgiebig gehaltenen Folienverbund aufgerakelt, wodurch dieser an dem Haftklebeband vollflächig festklebt. An dieser Stelle sei erwähnt, dass auch bei einem undefinierten Schräglauf des ausgespannten Teilstücks 76 des Haftklebebandes der in das Applikationswerkzeug aufgenommene Lackfolienzuschnitt in jedem Fall die gleiche definierte Relativlage zum Applikationswerkzeug einnimmt. Zugleich mit dem Ankleben des Folienzuschnittes an das Haftklebeband ergreift auch das bewegliche Greifwerkzeug 50 der werkzeugintegrierten Abzieh-Einrichtung den Anfasser 10 und hält ihn fest. Nach dem Aufnehmen des Folienverbundes in das Applikationswerkzeug kehrt die Rakel wieder in die in den Figuren 2 bis 4 in vollen Linien dargestellte, abgehobene Ausgangslage zurück.

Während eines Arbeitszyklus' tritt die Rakel 39 zweimal in Aktion und wird der Länge nach durch das Applikationswerkzeug 20, 20' bzw. 20" hindurchbewegt, nämlich ein erstes Mal zum Aufnehmen des Folienverbundes in das Applikationswerkzeug und ein zweites Mal zum Applizieren des freigelegten Lackfolienzuschnitts auf das vorgesehene Karosserieteil. Beim ersten Rakelhub (Aufnehmen) ist die bewegliche Wickeleinrichtung funktionslos wogegen sie beim zweiten Rakelhub (Applizieren) in Aktion tritt und während eines gemeinsam mit der Rakel vollführten Hubes den klebeseitigen Schutzstreifen applikations-simultan vom Lackfolienzuschnitt abzieht und aufwickelt. Bei allen in den Figuren dargestellten Ausführungsbeispielen der Applikationswerkzeuge sind zwei separate Schlitten für die Rakel einerseits (Schlitten 42) und die Wickeleinrichtung andererseits (Schlitten 59) sowie separate Betätigungszylinder vorgesehen, so dass sich die Rakel und die Wickeleinrichtung unabhängig voneinander verschieben lassen. Dementsprechend steht der in den Figuren 2 bis 4 gezeigte Saugkasten unmittelbar auf dem Tisch 18 auf.

Dem gegenüber ist jedoch der in Figur 6 dargestellte Saugkasten 19' über seitliche Haltewinkel frei schwebend oberhalb der Tischplatte des Tisches 18 gehalten, wobei die Bauhöhe des Saugkastens einerseits so gering und der Lichte Abstand der Kastenunterseite gegenüber der Tischplatte andererseits so groß gewählt ist, dass das Greifwerkzeug 50, wenn es unter die Aufnahmeebene 21 des Applikationswerkzeuges abgesenkt ist (Zustand wie in Figur 4), während des ersten Rakelhubes funktionslos und behinderungsfrei unterhalb des Saugkastens drunter weg bewegt werden kann. Wenn also ein frei schwebend gehalterter Saugkasten nach dem Vorbild von Figur 6 verwendet wird, dann brauchen im Applikationswerkzeug keine gesonderten Schlitten und Betätigungsantriebe für die Rakel zum einen und die bewegliche Wickeleinrichtung zum anderen vorgesehen zu werden. Vielmehr können beide Komponenten auf ein und demselben Schlitten untergebracht werden.

Zum Freilegen der Klebeseite des Lackfolienzuschnitts 6 wird der in das Applikationswerkzeug aufgenommene Folienverbund von der Unterlage 27 bis auf die Höhe des Gegenhalteschwertes 46 abgehoben. Anschließend wird zunächst stationär mit der oben beschriebenen Hilfseinrichtung der Anfang des klebeseitigen Schutzstreifens 8 von der Klebeseite des Lackfolienzuschnittes abgelöst, wobei die Klebeseite des Lackfolienzuschnittes durch Aufwickeln zunächst nur teilweise freigelegt wird. In diesem teilweise freigelegten Zustand des aufgenommenen Lackfolienzuschnittes wird das Gegenhalteschwert in seine den Saugkasten freigebende Ruhelage wieder zurückgeschwenkt und das Applikationswerkzeug mit dem darin aufgenommenen Folienverbund zur Karosserie bewegt. Nach dem lagegenauen Ausrichten des Lackfolienzuschnittes über dem Rahmenholm 3 bzw. 4 wird der Lackfolienzuschnitt 6 durch die innerhalb des Applikationswerkzeuges längsbewegliche Rakel 38, 39 aus der ausgespannten Abstandslage heraus auf die zu beklebende, lagedefiniert und unnachgiebig festgehaltene Karosseriepartie aufgerakelt. Dabei erfolgt das weitere Abziehen des klebeseitigen Schutzstreifens bzw. Freigelegen der Klebeseite des Lackfolienzuschnittes simultan mit dem Aufrakeln entsprechend dem Voranschreiten des Aufrakelns des Lackfolienzuschnittes 6 auf das Karosserieteil.

Der Vollständigkeit halber sei erwähnt, dass es auch denkbar wäre, den klebeseitigen Schutzstreifens 8 vor dem Applikationsvorgang vollständig vom Folienverbund abzuziehen und erst dann mit dem Applizieren der Lackfolie zu beginnen. Mit Rücksicht auf die Gefahr, dass durch das Abziehen des klebeseitigen Schutzstreifens im verbleibenden Folienverbund ein elektrostatisches Potential freigesetzt wird, welches Partikel aus der Umgebung an die freiliegende, klebewirksame Seite der Lackfolie 6 anziehen und diese dort festhalten kann, ist es jedoch ratsam, die Zeitspanne zwischen Abziehen des Schutzstreifens 9 und Aufkleben der Lackfolie 6 auf das Karosserieteil 1 möglichst kurz zu halten und nur möglichst geringe Ortsveränderung des verbleibenden Folienverbundes während dieser Zeit durchzuführen. Dieses Ziel wird am besten erreicht, wenn der klebeseitige Schutzstreifen erst während des Applikationsvorganges, d.h. applikationssimultan abgezogen wird.

Damit die applizierte Lackfolie auf der Karosserie gut und dauerhaft haftet, muss der Lackfolienzuschnitt 6 während des Applikationsvorganges mit einem sehr hohen Liniendruck aufgerakelt werden. Und zwar sollte dieser mindestens 6 N/cm betragen und vorzugsweise im Bereich von 7 bis 17 N/cm liegen. Bei einem so hohen Liniendruck unter der Rakelkante werden kleinste Gaseinschlüsse aus der Klebefuge voranschreitend herausgedrückt. Auch zunächst adhäsiv an der freigelegten Klebeschicht gebundene Luft wird aufgrund des hohen Liniendruckes der Rakel ausgequetscht. Es kann auch nicht zu einem nachträglichen Sammeln von mikrofeinen Gaseinschlüssen zu sichtbaren Gasblasen kommen, weil - wie gesagt - keinerlei Gaseinschlüsse mehr in der Klebefuge zurückbleiben. Beim Aufnehmen des bereitgestellten Folienverbundes in das Applikationswerkzeug genügt allerdings ein geringerer Rakeldruck als bei der Applikation der Lackfolie selber.

Wichtig bei dem applikations-simultanen Abziehen des klebeseitigen Schutzstreifens 9 ist, dass der Lackfolienzuschnitt 6 nur in einer einzigen Richtung und mit nur einer Rakel 38, 39 auf das Karosserieteil 1 aufgerakelt wird. Dabei wird ein annähernd konstanter Abstand A - siehe Figur 5 oder 7 - zwischen der voranschreitenden Abzugsstelle 69 des abzuziehenden Schutzstreifens einerseits und der nachfolgenden, ebenfalls voranschreitenden Rakel 38, 39 andererseits eingehalten. Um dieses mit einem einfachen und kompakt bauenden Applikationswerkzeug durchführen zu können, erfolgt das Abziehen des klebeseitigen Schutzstreifens 9 durch Überlagerung einer translatorischen Linearbewegung einer Wickeleinrichtung einerseits mit der rotatorischen Wickelbewegung der Wickeleinrichtung andererseits. Die den abgezogenen Schutzstreifen 8 aufwickelnde Wickeleinrichtung wird mit einer mit der Geschwindigkeit der Rakel annähernd übereinstimmenden Geschwindigkeit während des Wickelns translatorisch weiterbewegt. Außerdem wird der Schutzstreifen 8 durch den Wickelvorgang - für sich betrachtet - mit einer der Umfangsgeschwindigkeit des Wickels 68 entsprechenden Geschwindigkeit abgezogen, die so eingestellt werden muss, dass sie mit Geschwindigkeit der Rakel 38, 39 annähernd übereinstimmt, was durch eine entsprechende Programmierung des Applikationsroboters bzw. des zugehörigen Applikationswerkzeuges geschehen kann. Beim Verschieben des wickelnd arbeitenden Greifwerkzeuges überlagert sich die Translationsgeschwindigkeit mit der Wickelgeschwindigkeit.

Zur Verhinderung unzulässig großer Dehnungen im Folienverbund 5 und insbesondere im Lackfolienzuschnitt 6 vor allem gegen Ende des Aufrakelvorganges wird die endseitige Umlenkrolle 37b an die zu überklebene Karosserieoberfläche 3, 4 angenähert (siehe Figur 8). Zugleich kann das die endseitige Umlenkrolle 37b umschlingende Haftklebeband in dieser Phase nachgleiten gelassen werden, was z.B. durch ein Nachgeben der Vorratsrolle 30 erfolgen kann.

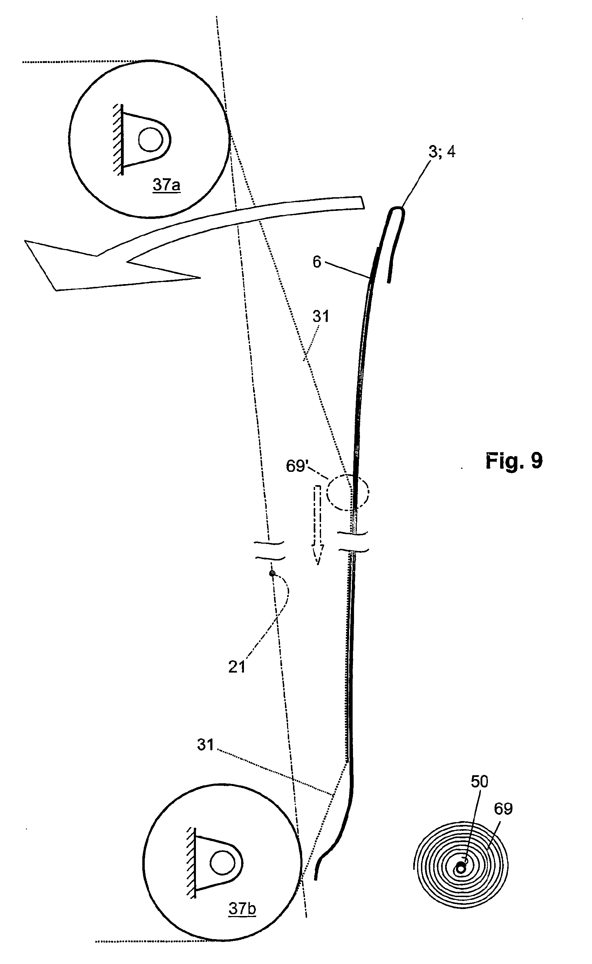

Schließlich wird der oberseitige Haftklebestreifen 31 aufgrund einer Abzugbewegung des Applikationswerkzeuges 20, insbesondere der startseitigen Umlenkrolle 37a, von der Außenseite des vollständig applizierten Lackfolienzuschnittes 6 abgezogen. Dazu wird das Applikationswerkzeug 20 um eine in der Nähe der endseitigen Umlenkrolle 37b liegende virtuelle Schwenkachse von der Karosserieoberfläche 3, 4 weggeschwenkt, wie dies in Figur 9 durch den gekrümmten Pfeil angedeutet ist. Stattdessen oder zusätzlich dazu kann das Applikationswerkzeug in Richtung zum endseitigen Ende des Lackfolienzuschnitts 6 hin bewegt werden. Aufgrund der einen und/oder der anderen dieser Bewegungen des Applikationswerkzeuges zieht die startseitige Umlenkrolle 37a den äußeren als Schutzstreifen dienenden Haftklebestreifen 31 vom vollständig auf dem Karosserieteil applizierten Lackfolienzuschnitt 6 ab, wobei die Ablösestelle 69' des Haftklebestreifens von oben nach unten wandert.

Eine Besonderheit der Lackfolienapplikation auf vertikale Rahmenschenkel von Pkw-Seitentüren besteht darin, dass nach dem ordnungsgemäßen Aufkleben des Lackfolienzuschnitts auf die Flachseite des Rahmenschenkels deren seitlich überstehenden Ränder umgebugt und rückseitig angedrückt werden müssen.

Dies kann, so lange dafür noch kein Roboterwerkzeug bereitgestellt ist, in herkömmlicher Weise manuell, u.U. unter Zuhilfenahme von besonderen Handwerkszeugen zum rückseitigen Andrücken vorgenommen werden. Diese Tätigkeit ist im übrigen bezüglich möglicher Fehler auch bei manueller Ausführung weniger problematisch, nachdem die Lackfolie in ihrem Hauptteil lagerichtig sowie blasen- und faltenfrei appliziert ist.

Ein wesentliches Merkmal der vorliegenden Erfindung besteht in der Wiederverwendung des in der Aufnahmeebene 21 ausgespannten Teils 76 des Haftklebebandes, welcher erst nach mehrmaligem Gebrauch erneuert wird. Hierfür bieten sich bei dem in den Figuren 2 bis 5 dargestellten Ausführungsbeispiel verschiedene Varianten an. Beispielsweise kann das in der Aufnahmeebene ausgespannte Teilstück 76 des werkzeugseitigen Haftklebebandes 31 intervallweise, d.h. nach mehrmaligem, z.B. vier- bis sechsmaligem Gebrauch vollständig erneuert werden. Stattdessen kann das Erneuern des genannten Klebebandteilstückes taktweise nach jedem Applikationsvorgang, aber jeweils nur partiell erfolgen, indem das in der Aufnahmeebene befindliche Klebebandstück 76 jeweils nur um einen entsprechenden Bruchteil der Ausspannlänge voranbewegt wird. Beispielsweise kann das Klebebandstück taktweise nach jedem Applikationsvorgang um 20 % der Ausspannlänge voranbewegt werden, so dass nach fünf Applikationsvorgängen das in der Aufnahmeebene befindliche Klebebandstück vollständig erneuert wäre.

In diesem Zusammenhang soll auf das in Figur 10 dargestellte Ausführungsbeispiel des Applikationswerkzeuges 20' kurz eingegangen, welches bezüglich seiner Arbeitsphase der Darstellung in Figur 2 entspricht. Bezüglich der Übereinstimmung dieses Werkzeuges mit dem Applikationswerkzeug 20 nach den Figuren 2 bis 5 kann auf die voraufgehende Beschreibung verwiesen werden. Lediglich im oberen Teil des Werkzeuges 20' besteht ein Unterschied zum Werkzeug 20. Und zwar sind beim Applikationswerkzeug 20' nach Figur 10 die Vorratsrolle 30 einschließlich der Ausgleichsrolle 70 einerseits und die Aufnahmerolle 33 andererseits umgekehrt zu dem in den Figuren 2 bis 5 dargestellten Ausführungsbeispiel bezüglich der Aufrakelrichtung angeordnet. Dies bedeutet, dass die Erneuerung des Haftklebebandes in der gleichen Richtung wie das Aufrakeln erfolgt. Dies hat den Vorteil, dass nach jedem partiellen Erneuerungsvorgang an demjenigen Ende des Folienverbundes, an dem sich der Anfasser 10 befindet, bei jedem Applikationsvorgang eine neue, noch unbenutzte Teillänge des Klebebandstückes 76 vorhanden ist, was für das anfängliche gezielte Ablösen des klebeseitigen Schutzstreifens 8 vom Lackfolienzuschnitt 6, ohne dass dieser sich vom Haftklebeband löst, besonders vorteilhaft ist.

An dieser Stelle sei auch noch auf die Einfachversion des Applikationswerkzeuges 20" nach Figur 11 eingegangen, bei dem eine Vorratsrolle und eine Aufnahmerolle überhaupt fehlen. Vielmehr ist beim Applikationswerkzeuges 20" ein externer Austausch eines in der Aufnahmeebene ausgespannten, kurzen Teilstückes von Haftklebeband 31' vorgesehen. Anstelle der Umlenkrollen 37a und 37b sind ortsfeste Spannzylinder 29a und 29b vorgesehen, an deren Mantel jeweils eine Klemmvorrichtung 14 zum Einklemmen der Enden des endlichen, in der Aufnahmeebene auszuspannenden Klebebandteilstückes 31' angeordnet sind. Der in Rakelrichtung hintere Spannzylinder 29b ist um einen gewissen Winkelbereich drehbar gelagert und durch eine Drehfeder im Sinne eines Spannens des eingespannten Klebebandteilstückes rotatorisch vorgespannt (Spannmoment 28). Auch mit einem solchen vereinfachten Applikationswerkzeug kann das erfindungsgemäße Applikationsverfahren ausgeübt werden, wobei allerdings das in der Aufnahmeebene ausgespannte Klebebandteilstück 31' nach mehrmaligem Gebrauch extern, d.h. während einer kurzen Unterbrechung, auszutauschen wäre. Dieser etwas umständliche Klebebandaustausch wäre nur bei geringen Stückzahlen von täglich zu verarbeitenden Lackfolien vertretbar.

Nachfolgend sei unter Bezugnahme auf die Figuren 7 bis 9 auf den Ablauf beim Applizieren des in das Roboterwerkzeug aufgenommenen Folienverbundes näher eingegangen, wobei als Ausgang ein geringfügig früherer Zustand zugrunde gelegt wird, wie er in Figur 7 dargestellt ist. D.h. die Phasen des Aufnehmens (Figur 2) sowie des anfänglichen Ablösens des klebeseitigen Schutzstreifens 8 vom Folienverbund (Figuren 3 und 4) sind bereits abgeschlossen, d.h. der Anfasser 10 ist durch das bewegliche Greifwerkzeug 50 erfasst und der vorderste Teil des klebeseitigen Schutzstreifens ist bereits durch das nun in der abgesenkten Arbeitsebene befindliche, drehantreibbare Greifwerkzeug zu einem kleinen Wickel 68 aufgewickelt. Die Stellung des Antriebsblockes 54/55 am Ende dieser Vorbereitungsphase des Applikationsvorganges mit stationärem anfänglichen Ablösen des Schutzstreifens ist in Figur 4 dargestellt. Außerdem hat das Applikationswerkzeug 20 den in der Aufnahmeebene 21 ausgespannten Folienverbund lagegenau in geringem Abstand zu dem Rahmenholm 3 bzw. 4 ausgerichtet.

Ein weiteres vorbereitendes Abziehen des Schutzstreifens von der Klebeseite der Lackfolie kann vorzugsweise auf dem Weg des Applikationswerkzeuges zur Karosserie stattfinden. Die Wickelgeschwindigkeit ist in dieser Phase auf die Verschiebegeschwindigkeit des Greifwerkzeuges 50 in der Weise abgestimmt, dass der vom Folienverbund abgezogene Teil des klebeseitigen Schutzstreifens 8 einerseits mit einer gewissen Dichte auf das Greifwerkzeug aufgewickelt und andererseits eine gewisse anfängliche Strecke der Klebeseite des Lackfolienzuschnittes freigelegt wird. Während des Übergangs des Applikationswerkzeuges vom Tisch 18, 18' zum Rahmenholm 3, 4 der Seitentüren wird das Applikationswerkzeug so geschwenkt, dass die startseitige Umlenkrolle 37a oben zu liegen kommt und die Lackfolie von oben nach unten, d.h. fallend aufgerakelt werden kann. Dies hat sich mit Rücksicht auf den konkaven Verlauf der Karosserieoberfläche im Bereich des Übergangs vom Rahmenholm in das Türseitenblatt als vorteilhaft im Vergleich zu einem aufsteigenden Aufrakeln herausgestellt.

Zu Beginn der eigentlichen Applikationsphase wird die Rakel 38/39 aus der in Figur 4 dargestellten Warteposition auf den in der Aufnahmeebene ausgespannten Folienverbund 5 in Richtung des Pfeiles abgesenkt, wobei das Rakelblatt 39 aus Filz mit seiner Kante vor dem Lackfolienzuschnitt 6 auf das ausgespannte Teilstück 76 des Haftklebebandes aufsetzt - siehe Figur 7, unten. Nachdem das Aufrakeln der Lackfolie auf den Rahmenschenkel der Fenstereinfassung in vertikalen und lagedefiniert abgestütztem Zustand der Fahrzeugseitentür erfolgt, ist die Darstellung in den Figuren 7 bis 9 dementsprechend in Vertikalstellung gewählt. Aufgrund des auf die Rakel ausgeübten Anpressdruckes wird der Folienverbund auf die zu applizierende Oberfläche des Rahmenholmes 3, 4 angedrückt, wobei das Klebebandstück aus der zunächst gestreckten Ausspannlage V-förmig herausgedrückt wird. Dabei darf es nicht zu einer relativen Lageveränderung des Anfangs des Lackfolienzuschnitts 6 in Längsrichtung relativ zum Rahmenholm 3 bzw. 4 kommen. Deshalb ist es vorteilhaft, wenn während dieser Aufsetzphase die Aufnahmerolle 33 vorübergehend festgesetzt wird. Ein etwaiger Bedarf an Haftklebeband zum Ausgleich der V-förmigen Spreizung des in der Aufnahmeebene ausgespannten Teilstückes 76 wird dann ausschließlich von der Vorratsrolle 30 oder der Ausgleichsrolle her geholt. Ausgehend von der in Figur 7 dargestellten Ausgangsstellung der Rakel 39 wird diese nun innerhalb des Applikationswerkzeuges unter starker Anpressung dem Folienverbund entlanggeführt, wobei das Applikationswerkzeug in Längsrichtung des Lackfolienzuschnittes ortsfest über dem Karosserieteil verharrt.

Während des Aufrakelns der Lackfolie auf die Karosserieoberfläche wird das wickelnd angetriebene Greifwerkzeug 50 vorauslaufend mit der gleichen Geschwindigkeit wie die Rakel und mit einem konstanten Abstand A zur Rakel translatorisch voranbewegt. Zugleich wird das Greifwerkzeug mit einer solchen Wickelgeschwindigkeit angetrieben, dass der an der voranschreitenden Ablösestelle 69 von der Lackfolie abgelöste klebeseitige Schutzstreifen 8 kontinuierlich zu einem Wickel 68 aufgewickelt wird. Dabei ist die Umfangsgeschwindigkeit des Wickels annähernd, d.h. im Mittel gleich der Translationsgeschwindigkeit der Rakel. Im Bereich der voranschreitenden Ablösestelle 69 wird der Folienverbund 5 durch den größer werdenden Wickel 68 abgestützt.

Das Ende des Rakelvorganges ist in Figur 8 dargestellt. Die Rakel 39 hat das Ende des Lackfolienzuschnittes 6 erreicht und der nun schon sehr große Wickel 68 des klebeseitigen Schutzstreifens befindet sich bereits außerhalb des Karosserieteils. Die endseitige Umlenkrolle 37b ist gegen Ende des Rakelvorganges an das Karosserieteil angenähert worden, um den Winkel des Reststückes des Folienverbundes gegenüber der Aufnahmeebene 21 nicht zu groß werden zu lassen. Gegebenenfalls gleitet bei einem zu starken Anwachsen der Zugspannung Haftklebeband von der Vorratsrolle selbsttätig nach.

Bei dem in Figur 9 gezeigten Stadium des Applikationsvorganges ist die Lackfolie 6 bereits vollständig auf dem Karosserieteil 3 bzw. 4 angeklebt und der klebeseitige Schutzstreifen vollständig von der Lackfolie abgezogen und zu einem Wickel 68 aufgewickelt. Es braucht lediglich noch das zwischen den Umlenkrollen 37a und 37b ausgespannte Teilstück 76 des Haftklebebandes von der Außenseite der applizierten Lackfolie 6 abgezogen zu werden. Dieses Abziehen geschieht durch eine großräumige Schwenkbewegung des Applikationswerkzeuges vom Karosserieteil weg, wobei die Ablösestelle 69' des Haftklebebandes vom einen Ende der Lackfolie zum anderen hin läuft. In Figur 9 erfolgt das Abziehen des Haftklebebandes durch eine weiträumige Bewegung der startseitigen Umlenkrolle 37a. Es ist aber ebenso denkbar, dass das Haftklebeband aufgrund einer aushohlenden Bewegung der endseitigen Umlenkrolle vorgenommen wird.

Nach dem Abziehen des Haftklebebandes wird dieses um einen gewissen Teilbetrag der Ausspannlänge weiterbewegt, wogegen der aufgewickelte klebeseitige Schutzstreifen 8 über einem Abfallbehälter abgeworfen wird. Zum Abwerfen des auf dem Greifwerkzeug aufgewickelten klebeseitigen Schutzstreifens muss das Applikationswerkzeug in eine solche Stellung gebracht werden, dass das Greifwerkzeug 50 etwa parallel zur Schwerkraftrichtung ausgerichtet ist und mit ihrem freien Ende nach unten weist, so dass nach dem Öffnen des Greifwerkzeuges der gelockerte Wickel 68 schwerkraftbedingt axial vom Wickelkern abfallen kann.

Das bereits mehrfach erwähnte Greifwerkzeug ist wegen seiner praktischen Bedeutung für die Applikationstechnik in einem Ausführungsbeispiel in Figur 12 gezeigt und soll nachfolgend näher beschrieben werden. Das dargestellte Greifwerkzeug 50 ist als eine beweglich geführte und drehbare Schnabelzange ausgebildet, die ein oberes (51) und ein unteres Schnabelteil 52 aufweist, die über ihre Längserstreckung hinweg jeweils von konstantem Querschnitt ausgebildet sind. Der obere Schnabelteil ist im Querschnitt rinnenförmig gestaltet, wobei die beiden Seitenränder gemeinsam eine Anlageebene 53 des oberen Schnabelteiles aufspannen. Zwischen diese Seitenränder taucht der untere Schnabelteil beim Schließen der Schnabelzange radial ein.

Die Schnabelzange 51/52 muss sich in der aufnahmebereiten Ausgangsposition in einer solchen Umfangsstellung befinden und der Drehantrieb muss mit einer entsprechend geeigneten Steuerung zum selbsttätigen Herbeiführen dieser Umfangsstellung ausgestattet sein, bei der das obere Schnabelteil 51 oberhalb der Aufnahmeebene 21 angeordnet ist, wogegen das untere Schnabelteil 52 in der aufnahmebereiten Ausgangsposition sich unterhalb der Aufnahmeebene 21 befindet.

Bei dem in Figur 12 dargestellten Ausführungsbeispiel des Greifwerkzeuges ist eine symmetrische Betätigung der beiden Schnabelteile 51 und 52 mittels einer Scherenkonstruktion vorgesehen. Zu diesem Zweck weisen die beiden Schnabelteile an ihrem in der angetriebenen Wickelwelle 77 hineinragenden Teil jeweils einen Gleitstein 79 auf, der mit dem jeweiligen Schnabelteil eine einteilige und starre Einheit bildet. Die beiden Gleitsteine ihrerseits sind in einer Kulisse 78 radial zur Rotationsachse der Wickelwelle geführt, wobei die Kulisse starr mit der Wickelwelle verbunden ist. Letztere ist über einen axialen Teilbereich der Länge nach schlitzartig freigearbeitet, so dass ein Freiraum zur Unterbringung einer Betätigungsschere 82 geschaffen ist. Am gegenüber liegenden Ende des Freiraumes ist innerhalb desselben eine Arbeitskulisse 80 angeordnet, die mit dem Betätigungsstößel 66 verbunden ist, der seinerseits durch einen Hubzylinder 67 in der einen oder anderen Richtung axial verschoben werden kann. In der Arbeitskulisse sind zwei Gleitsteine 81 radial geführt. Die Enden der Scherenarme sind hüben und drüben mit den Gleitsteinen 79 bzw. 81 gelenkig verbunden. Der mittlere Gelenkpunkt der beiden Scherenarme ist über weitere Gleitsteine in axial verlaufenden Kulissen geführt, so dass die Betätigungsschere in allen Spreizzuständen stets symmetrisch zur Rotationsachse der Wickelwelle innerhalb des Freiraumes gehalten wird. Aufgrund einer solchen Konstruktion können durch axiales Verschieben des Betätigungsstößels 66 die beiden Schnabelteile 51 und 52 des Greifwerkzeuges symmetrisch zu einer Mittelstellung geöffnet oder geschlossen werden.

Der Vorteil des Greifwerkzeugs 50 nach Figur 12 besteht darin, dass sie nicht nur selber, sondern auch ihr Betätigungsantrieb baulich relativ einfach und robust gestaltet ist. Allerdings muss die unterlage 27 bzw. der Saugkasten 19, 19' es baulich ermöglichen, dass beim Aufnehmen eines Folienverbundes, d.h. im geöffneten Zustand der Schnabelzange, diese in Längsrichtung des bereitgelegten Folienverbundes über die Saugleiste 36 des Haltearmes 44 hinweg bewegt werden kann. Die Saugleiste muss also in Vertikalrichtung entsprechend schmal, d.h. schmaler als die lichte Öffnung der geöffneten Schnabelzange, ausgebildet sein.

### Bezugszeichenliste

- 1: Transportgestell für 2
- 2: Seitentüren
- 3: Rahmenholme, Fahrertüren
- 4: Rahmenholme, Fondtüren
- 5: Folienverbund, Figur 13
- 5': Folienverbund, Figur 14
- 6: Lackfolienzuschnitt, Fig. 13 und 14
- 7: Abfallstück, Lackfolie, Figur 13
- 8: klebeseitiger Schutzstreifen, Fig. 13 und 14
- 9: Unterbrechung zwi. Nutz- und Abfallstück von 5
- 10: Anfasser, Figur 13
- 10': Anfasser, Figur 14
- 11: Anlieferungsbehälter für 5, 5'
- 12: Verbundstapel in 11
- 13: Schächte für 5 auf 18'
- 14: Klemmvorrichtung an 29a, b
- 15: Applikationsroboter
- 16: Bereitstellungsroboter
- 16': Umsetzer für 5 auf 18'
- 17: Sicherungsanschläge für 11
- 18, 18': Bereitstellungstisch für 5
- 19, 19': Saugkasten auf 18, 18'
- 20: Applikationswerkzeug, Figuren 2 bis 5
- 20': Applikationswerkzeug, Figur 10
- 20": Applikationswerkzeug, Figur 11
- 21: Aufnahmeebene in 20, 20', 20"
- 22: Arbeitsseite von 20, 20', 20"
- 23: Rückseite von 20, 20', 20"
- 24: Arbeitsarm von 15
- 25: Handgelenk von 24
- 26: Sauggreifer an 16 für 5
- 27: Unterlage für 5, 5' auf 19
- 28: Spannmoment in 29b (Figur 11)
- 29a, 29b: Spannzylinder für 31' (Figur 11)
- 30: Vorratsrolle
- 31: Haftklebeband
- 31': Haftklebebandstück (Figur 11)
- 32: Bremse für 30
- 33: Aufnahmerolle
- 34: Antriebswelle
- 35: Antriebsmotor
- 36: Saugleiste an 44
- 37a: startseitige Umlenkrolle
- 37b: endseitige Umlenkrolle
- 38: Rakelhalter
- 39: Rakelblatt
- 39': Versteifungsblech für 39
- 40: Anstellführung für 38, 39
- 41: Anstellantrieb
- 42: Rakelschlitten
- 43: Verschiebe- und Anpressantrieb für 42
- 44, 44': Haltearm an 19 für 10, 10'
- 45: Vakuumanschluss für 19
- 46: Gegenhalteschwert
- 47: Halter für 46
- 48: Schlitten für 47
- 49: Feder für 48
- 50: Greifwerkzeug, als Schnabelzange ausgebildet
- 51: oberes Schnabelteil
- 52: unteres Schnabelteil
- 53: Anlageebene von 51
- 54: Winkelgetriebe
- 55: Antriebsmotor
- 56: Parallelogrammlenker
- 57: Schwenkantrieb
- 58: elastisches Medium zum Zentrieren von 39, 39' um 74
- 59: Schlitten für Aufwickler
- 60: Führungsstangen
- 61: erste Schwenkachse von 39, 39' (Wanken)
- 62: Lagerzapfen an 65
- 63: Drucklagerring
- 64: elastisches Medium zum Zentrieren von 65 um 61
- 65: Aufnahmegabel für 39, 39'
- 66: Betätigungsstößel
- 67: Hubzylinder
- 68: Wickel aus 8
- 69: Ablösestelle 8 von 6
- 69': Ablösestelle 31 von 6
- 70: Ausgleichsrolle
- 71: Führung für 70
- 72: Spannfeder für 70
- 73: Lagerzapfen für 74
- 74: zweite Schwenkachse von 39 (Gieren)
- 75: Lagerbuchse in 39
- 76: zwi. 37a + 37b ausgespannter Teil von 31
- 77: Wickelwelle
- 78: Kulisse in 77
- 79: Gleitstein an 51, 52
- 80: Arbeitskulisse
- 81: Gleitsteil
- 82: Betätigungsschere
- A: Abstand Ablösestelle 69/Rakel
- L: Nutzlänge von 6
- r: Krümmungsradius des Querschnitts von 46 an der Kante

## Patentansprüche

1. Verfahren zum automatisierten Applizieren von selbsthaftender Lackfolie auf ein lagedefiniert festgehaltenes Karosserieteil unter Verwendung eines mit einem Applikationswerkzeug versehenen, frei programmierbaren Industrieroboters, welche Lackfolie als vorkonfektionierter, länglicher, mehrlagiger Folienverbund mit einem darin enthaltenen Lackfolienzuschnitt vorbestimmter Form lagedefiniert im Arbeitsbereich des Industrieroboters zur Aufnahme durch das Applikationswerkzeug bereitgestellt wird, in welchem Verfahren ein mit einem endseitig angebrachten Anfasser versehener, klebeseitiger Schutzstreifen mittels einer werkzeugintegrierten Abzieh-Einrichtung am Anfasser ergriffen, vom ausgespannt gehaltenen Folienzuschnitt abgezogen und so dessen Klebeseite freigelegt wird, bei dem ferner der ausgespannt gehaltene Lackfolienzuschnitt über dem zu beklebenden Karosserieteil bei geringem Abstand zu ihm lagegenau ausgerichtet und von der Sichtseite der Lackfolie her in Gegenwart eines sichtseitigen Schutzstreifens mittels einer werkzeugintegrierten, beweglichen Rakel auf das Karosserieteil aufgerakelt wird, wobei anschließend der sichtseitige Schutzstreifen von der applizierten Lackfolie abgezogen wird,
ω wobei es ein lediglich zweilagiger Folienverbund (5, 5') bestehend aus dem Lackfolienzuschnitt (6) und aus einem klebeseitig Schutzstreifen (8) verwendet wird, wobei der Folienverbund (5, 5') nur den einen, unmittelbar an die Nutzlänge (L) des Lackfolienzuschnitts (6) angrenzenden Anfasser (10, 10') aufweist,
ω wobei der solcherart ausgebildete Folienverbund (5, 5') einzeln auf einer harten, ebenen Unterlage (27) entgegen einer etwaigen Rollneigung des Folienverbundes (5, 5') in den ebenen Zustand gespannt wird und derart bereitgestellt, dass die nackte Sichtseite des Lackfolienzuschnitts (6) frei zugänglich ist,
ω wobei der solcherart bereitgestellte Folienverbund (5, 5') von dem Applikationswerkzeug (20, 20', 20"), welches mit seiner Aufnahmeebene (21) in dichtem Abstand zum bereitgestellten Folienverbund (5, 5') gehalten wird, übernommen wird indem ein im Applikationswerkzeug (20, 20', 20") in der Aufnahmeebene (21) ausgespannt gehaltenes Haftklebeband (31, 31') als Aufnahmemedium auf die freiliegende Rückseite des Folienverbundes (5, 5') durch die werkzeugintegrierte Rakel (39) aufgerakelt wird,
ω wobei der im übernommenen Folienverbund (5, 5') enthaltene Lackfolienzuschnitt (6) - nach dem Freilegen der Klebeseite des Lackfolienzuschnitts (6) durch Aufrakeln auf das Karosserieteil (3, 4) appliziert wird und, wobei das Haftklebeband (31, 31') als Schutzstreifen verwendet wird, und
ω wobei anschließend das werkzeugseitige, als Aufnahmemedium und als Schutzstreifen verwendete Haftklebeband (31, 31') von der applizierten Lackfolie (6) abgezogen wird und zur erneuten Verwendung bei einem nachfolgenden Applikationsvorgang im Applikationswerkzeug (20, 20', 20") belassen wird.

2. Verfahren nach Anspruch 1,
**dadurch gekennzeichnet, dass** das der Rollneigung des Folienverbundes (5, 5') entgegen wirkende Festspannen desselben durch Vakuum erfolgt, welches an der als Saugkasten (19) ausgebildeten Unterlage (27) anlegbar ist, wobei der Anfasser (10, 10') frei abragend gehalten wird.

3. Verfahren nach Anspruch 1,
**dadurch gekennzeichnet, dass** das als Aufnahmemedium und als Schutzstreifen verwendete Teilstück (76) des werkzeugseitigen Haftklebebandes (31, 31') intervallweise, d.h. nach mehrmaligem Gebrauch, vollständig erneuert wird.

4. Verfahren nach Anspruch 1,
**dadurch gekennzeichnet, dass** das als Aufnahmemedium und als Schutzstreifen verwendete Haftklebeband (31) quasi-endlos im Applikationswerkzeug (20, 20') bevorratet und nach Gebrauch auch wieder in ihm (20, 20') gesammelt wird, welches Haftklebeband (31) mittels Umlenkrollen (37a, 37b) in die Aufnahmeebene (21) des Applikationswerkzeuges (20, 20') umgelenkt und durch Voranbewegen bezüglich des in der Aufnahmeebene (21) befindlichen Teilstückes (76) erneuert wird.

5. Verfahren nach Anspruch 4,
**dadurch gekennzeichnet, dass** das Erneuern des in der Aufnahmeebene (21) befindlichen Teilstückes (76) des Haftklebebandes (31) taktweise nach jedem Applikationsvorgang, aber jeweils nur partiell erfolgt, indem das in der Aufnahmeebene (21) befindliche Teilstück (76) des Haftklebebandes (31) jeweils nur um einen Bruchteil der Ausspannlänge voranbewegt wird.

6. Verfahren nach Anspruch 5,
**dadurch gekennzeichnet, dass** das in der Aufnahmeebene ausgespannten Teilstück (76) des Haftklebebandes (31) taktweise in der gleichen Richtung voranbewegt wird, in der auch die Rakel (39) arbeitet.

7. Verfahren nach Anspruch 1,
**dadurch gekennzeichnet, dass** zu Beginn des Applikationsvorganges der klebeseitige Schutzstreifen (8) nur partiell abgezogen und die Klebeseite des Lackfolienzuschnittes (6) zunächst nur teilweise freigelegt wird und dass das weitere Abziehen des klebeseitigen Schutzstreifens (8) bzw. Freigelegen der Klebeseite des Lackfolienzuschnittes (6) simultan mit dem Aufrakeln entsprechend dem Voranschreiten des Aufrakelns des Lackfolienzuschnittes (6) auf das Karosserieteil (3, 4) erfolgt.

8. Verfahren nach Anspruch 1,
**dadurch gekennzeichnet, dass** der klebeseitige Schutzstreifen (8) anfänglich stationär unter Erzwingung eines engen Krümmungsradius' (r) des Schutzstreifens (8) aufgrund Gegenhaltens eines beweglichen Schwertes (46) von der Klebeseite des Lackfolienzuschnittes (6) abgezogen wird.

9. Verfahren nach Anspruch 1,
**dadurch gekennzeichnet, dass** der Lackfolienzuschnitt (6) nur in einer einzigen Richtung und mit nur einer Rakel (39) auf das Karosserieteil (3, 4) aufgerakelt wird.

10. Verfahren nach Anspruch 1,
**dadurch gekennzeichnet, dass** während des Aufrakelns ein annähernd konstanter Abstand (A) zwischen der voranschreitenden Rakel (39) einerseits und der ebenfalls voranschreitenden Abzugsstelle (69) des abzuziehenden klebeseitigen Schutzstreifens (8) eingehalten wird.

11. Verfahren nach Anspruch 1,
**dadurch gekennzeichnet, dass** das Abziehen des klebeseitigen Schutzstreifens (8) durch Überlagerung einer Translationsbewegung einer den klebeseitigen Schutzstreifen (8) aufwickelnden Wickeleinrichtung (50, 54, 55) einerseits, die mit einer mit der Geschwindigkeit der Rakel (39) übereinstimmenden Geschwindigkeit bewegt wird, und einer Wickelbewegung der Wickeleinrichtung (50, 54, 55) andererseits erfolgt, wobei die Wickeleinrichtung (50, 54, 55) - für sich betrachtet - den abgezogenen Schutzstreifen (8) ebenfalls mit einer mit der Geschwindigkeit der Rakel (39) abgestimmte Geschwindigkeit aufwickelt.

12. Verfahren nach Anspruch 1,
**dadurch gekennzeichnet, dass** das Ende des in der Aufnahmeebene (21) des Applikationswerkzeuges (20, 20', 20") ausgespannten Teilstückes (76) des Haftklebebandes (31), dem sich die Rakel (39) gegen Ende des Aufrakelvorganges nähert, an die zu überklebende Karosserieoberfläche (3, 4) angenähert wird.

13. Verfahren nach Anspruch 1,
**dadurch gekennzeichnet, dass** das Ende des in der Aufnahmeebene (21) des Applikationswerkzeuges (20, 20') ausgespannten Teilstückes (76) des Haftklebebandes (31), dem sich die Rakel gegen Ende des Aufrakelvorganges nähert, gegen Ende des Aufrakelvorganges nachgleiten gelassen wird.

14. Verfahren nach Anspruch 1,
**dadurch gekennzeichnet, dass** mit einem Liniendruck von mindestens 6 N/cm, vorzugsweise in der Stärke von 7 bis 17 N/cm aufgerakelt wird.

15. Verfahren nach Anspruch 1,
**dadurch gekennzeichnet, dass** zum Abziehen des in der Aufnahmeebene (21) ausgespannten Teilstückes (76) des Haftklebebandes (31) vom vollständig applizierten Lackfolienzuschnitt (6) das Applikationswerkzeug (20, 20', 20") um eine in der Nähe eines Endes des Teilstückes (76) des Haftklebebandes (31), vorzugsweise in der Nähe des startseitigen Endes des Teilstückes liegende, virtuelle Schwenkachse von der Karosserieoberfläche (3, 4) weggeschwenkt und/oder in Richtung zu dem entsprechenden Ende des Lackfolienzuschnitts (6) hin bewegt wird, derart dass das in der Aufnahmeebene (21) ausgespannte Teilstück (76) des Haftklebebandes (31), beginnend beim gegenüber liegenden Ende, vom applizierten Lackfolienzuschnitt (6) abgezogen wird.

16. Vorrichtung zum automatisierten Applizieren von selbsthaftender Lackfolie auf ein lagedefiniert festgehaltenes Karosserieteil,
ω welche Lackfolie als vorkonfektionierter, länglicher, mehrlagiger Folienverbund mit einem darin enthaltenen Lackfolienzuschnitt vorbestimmter Form lagedefiniert im Arbeitsbereich eines Industrieroboters zur Aufnahme durch ein Applikationswerkzeug bereitgestellt ist,
ω welche Vorrichtung im Wesentlichen aus dem durch den frei programmierbaren Industrieroboter handhabbaren Applikationswerkzeug besteht,
ω das Applikationswerkzeug weist an seiner, nachfolgend "Arbeitsseite" genannten Flachseite eine Aufspannebene auf, die durch zwei im Abstand zueinander angeordnete Halteorgane für den Folienverbund gebildet ist, mit dem dieser ausgespannt gehalten und in ausgespanntem Zustand durch den Industrieroboter frei gehandhabt werden kann,
ω benachbart zu einem der Halteorgane ist ferner ein parallel-verschiebbares Greifwerkzeug angeordnet, das zum einen aufnahmebereit an die Aufnahmeebene zwecks Ergreifens eines Anfassers des Folienverbundes bewegbar, zum anderen aus dieser Startposition unter die Aufnahmeebene und dort parallel zur Aufnahmeebene und parallel zu sich selber zwecks Abziehens eines klebeseitigen Schutzstreifens vom Folienverbund verfahrbar ist,
ω innerhalb des Applikationswerkzeuges ist ferner eine Rakel angeordnet, welche mit ihrer Arbeitskante aus einer von der Aufnahmeebene abgerückten Warteposition in eine nahe bei der Aufnahmeebene liegende Arbeitsposition verschiebbar und mit bestimmter Kraft anpressbar und in der Arbeitsposition geradlinig und parallel zur Aufnahmeebene verschiebbar ist,
insbesondere zur Ausübung des Verfahrens nach Anspruch 1, wobei, zum Applizieren eines lediglich zweilagigen Folienverbundes (5, 5') bestehend aus dem Lackfolienzuschnitt (6) und aus einem klebeseitigen Schutzstreifen (8), der nur den einen, unmittelbar an die Nutzlänge (L) des Lackfolienzuschnitts (6) angrenzenden Anfasser (10, 10') aufweist, eine harte, ebene Unterlage (27) zwecks Bereitstellung jeweils eines Folienverbundes (5, 5') im Arbeitsbereich des Industrieroboters (15) vorgesehen ist, auf der der Folienverbund (5, 5') entgegen einer etwaigen Rollneigung desselben in den ebenen Zustand festspannbar ist, und die beiden im Abstand angeordneten, die Aufnahmeebene (21) bildenden Halteorgane des Applikationswerkzeuges (20, 20') als Umlenkrollen (37a, 37b) ausgebildet sind, über die ein auf einer abbremsbaren Vorratsrolle (30) innerhalb des Applikationswerkzeuges (20, 20') bevorratetes, quasi-endloses Haftklebeband (31) unter Zugspannung hinweggeführt und zu einer ebenfalls innerhalb des Applikationswerkzeuges (20, 20') angeordneten, drehantreibbaren Aufnahmerolle (33) hingeführt ist, wobei zur Aufnahme des Folienverbundes (5, 5') in das Applikationswerkzeug (20, 20') der zwischen den beiden Umlenkrollen (37a, 37b) ausgespannte Teil (76) des Haftklebebandes (31) durch die werkzeugintegrierte Rakel (39) auf die nackte, freiliegende Außenseite des bereitgestellten Folienverbundes (5, 5') aufrakelbar ist.

17. Vorrichtung nach Anspruch 16,
**dadurch gekennzeichnet, dass** die ebene, harte Unterlage (27) zur lagedefinierten Bereitstellung jeweils eines Folienverbundes (5, 5') als Saugkasten (19, 19') ausgebildet ist.

18. Vorrichtung nach Anspruch 16,
**gekennzeichnet durch** einen frei von der Unterlage (27) zur Bereitstellung des Folienverbundes (5, 5') abragenden, den Anfasser (10, 10') an seinem äußersten Ende festhaltenden Stützarm (44, 44'), der den Anfasser (10, 10') ober- und unterseitig und seitlich frei zugänglich derart abstützt oder ausspannt, dass er von dem parallel-verschiebbaren Greifwerkzeug (50) erfassbar ist.

19. Vorrichtung nach Anspruch 16,
**dadurch gekennzeichnet, dass** die Vorratsrolle (30) auf derjenigen Seite des ausgespannten Teilstückes (76) des Haftklebebandes (32) angeordnet ist, an der die Rakelbewegung beginnt.

20. Vorrichtung nach Anspruch 16,
**gekennzeichnet durch** die Gemeinsamkeit folgender Merkmale:
ω nahe der harten Unterlage (27) zur Bereitstellung des Folienverbundes (5, 5') ist ein Gegenhalteschwert (46) vorgesehen, welches im vertikalen Abstand zur Unterlage (27) und parallel zu ihr gehaltert und parallel zur Unterlage (27) verschwenk- oder verschiebbar sowie parallel zur Längserstreckung der Unterlage (27) gegen einen bestimmten Widerstand (Feder 49) verschiebbar geführt ist (Schlitten 48),
ω das Gegenhalteschwert (46) ist aus einer die Unterlage (27) frei gebenden Ruheposition in eine Arbeitsposition oberhalb der Unterlage (27) einschwenkbar oder einschiebbar, in der eine gerundete Kante des Gegenhalteschwertes (46) quer zur Längserstreckung des Folienverbundes (5, 5') zu liegen kommt und sich dabei etwa positionsgleich zu der dem Anfasser (10, 10') zugekehrten Endkante des Lackfolienzuschnitts (6) befindet,
ω der klebeseitige Schutzstreifen (8) ist über die gerundete Kante des Gegenhalteschwertes (46) **durch** das werkzeugintegrierte, bewegliche Greifwerkzeug (50) abziehbar, wobei das Gegenhalteschwert (46) gegen den genannten Widerstand (Feder 49, Schlitten 48) parallel zur Längserstreckung der Unterlage (27) selbsttätig verschiebbar ist.

21. Vorrichtung nach Anspruch 16,
**dadurch gekennzeichnet, dass** das Greifwerkzeug (50) drehbar gelagert (Getriebe 54) und dreantreibbar (Antrieb 55) ausgebildet ist und über seine Längserstreckung hinweg einen etwa konstanten, der Rundform angenäherten Querschnitt aufweist, derart dass es zugleich als Wickelkern für ein vom Greifwerkzeug (50) endseitig ergriffenes, bandförmiges Gut verwendbar ist.

22. Vorrichtung nach Anspruch 16 oder 21,
**dadurch gekennzeichnet, dass** das Greifwerkzeug (50) als eine innerhalb des Applikationswerkzeuges (20, 20', 20") bewegliche Schnabelzange ausgebildet ist, die einen - zumindest in der aufnahmebereiten Ausgangsposition - oberhalb der Aufnahmeebene (21) angeordneten oberen (51) und einen unterhalb der Aufnahmeebene (21) angeordneten unteren Schnabelteil (52) aufweist.

23. Vorrichtung nach Anspruch 16,
**dadurch gekennzeichnet, dass** das drehantreibbare, zugleich als Wickelkern für den klebeseitigen Schutzstreifen (8) dienende Greifwerkzeug (50) zu Beginn eines jeden Applikationsvorganges gezielt in eine solche Drehstellung einfahrbar ist, dass das Greifwerkzeug (50) mit seiner Aufnahmefläche (53) aufnahmebereit parallel zum Anfasser (10, 10') des im Applikationswerkzeug (20, 20', 20") aufgenommenen Folienverbundes (5, 5') steht.

24. Vorrichtung nach Anspruch 16,
**dadurch gekennzeichnet, dass** der Drehantrieb (55) des zugleich als Wickelkern dienenden Greifwerkzeuges (50) während des Wickelvorganges in der Weise bezüglich der Drehgeschwindigkeit steuerbar ist, dass ungeachtet eines zunehmenden Durchmessers des Wickels (68) des klebeseitigen Schutzstreifens (8) eine vorgebbare, zumindest angenähert konstante Umfangsgeschwindigkeit des Wickels (68) eingehalten werden kann.

25. Vorrichtung nach Anspruch 16,
**dadurch gekennzeichnet, dass** die Rakel (39) und das Greifwerkzeug (50) in Arbeitsstellung beim Applizieren in fester Zuordnung in Längsrichtung zueinander stehen (Abstand A) und mit einheitlicher Geschwindigkeit verschiebbar sind.

26. Vorrichtung nach Anspruch 16,
**dadurch gekennzeichnet, dass** die Rakel (39) aus einem Filz von etwa 10 bis 20 mm Stärke und einer Dichte von 0,6 g/cm³ ± 10 % besteht.

27. Verwendung eines ausgespannt gehaltenen Haftklebebandes (31, 31') beim automatisierten Applizieren selbstklebender Lackfolienzuschnitte (6) auf Karosserieteile (3, 4) als Mittel zum Aufnehmen eines Lackfolienverbundes (5, 5') von einer Unterlage (27) und als außenseitiger Schutzstreifen beim Andrücken des Lackfolienzuschnitts (6) auf das Karosserieteil (3, 4).

## Claims

1. Method for automated application of self-adhesive lacquer film to a bodywork part securely held in a positionally defined manner using a freely programmable industrial robot provided with an application tool, which lacquer film is presented as a prefabricated, elongated, and multi-ply film composite with a lacquer film blank contained therein in a positionally defined manner in the working region of the industrial robot for taking up by the application tool, in which method an adhesive-side protective strip, provided with a tab attached at the end, is grasped at the tab by means of a tool-integrated pulling-off device, is pulled off from the film blank that is kept stretched, and its adhesive side is in this way exposed, in which furthermore the lacquer film blank that is kept stretched is aligned in a positionally exact manner over the bodywork part at a small distance from it, and is doctor-bladed onto the bodywork part from the visible side of the lacquer film in the presence of a protective film on the visible side by means of a tool-integrated, movable doctor knife, the protective film on the visible side subsequently being pulled off from the applied lacquer film,
ω a merely two-ply film composite (5, 5') comprising the lacquer film blank (6) and an adhesive-side protective strip (8) being used, the film composite (5, 5') having only the one tab (10, 10'), which is directly adjacent the usable length (L) of the lacquer film blank (6),
ω̅ the film composite (5, 5') formed in such a way being stretched on its own into the planar state, counter to any tendency of the film composite (5, 5') to curl up, on a hard, level base (27) and is presented in such a way that the bare visible side of the lacquer film blank (6) is freely accessible,
ω̅ the film composite (5, 5') presented in such a way being taken over by the application tool (20, 20', 20''), which is held with its take-up plane (21) at a close distance from the presented film composite (5, 5'), in that an adhesive strip (31, 31') that is kept stretched in the take-up plane (21) in the application tool (20, 20', 20'') is doctor-bladed as a take-up medium onto the exposed rear side of the film composite (5, 5') by the tool-integrated doctor knife (39),
ω̅ the lacquer film blank (6) contained in the taken-over film composite (5, 5') being applied by doctor-blading to the bodywork part (3, 4) after the exposure of the adhesive side of the lacquer film blank (6), and the adhesive strip (31, 31') being used as a protective strip, and
ω̅ subsequently, the tool-side adhesive strip (31, 31'), used as a take-up medium and as a protective strip, being pulled off from the applied lacquer film (6) and left in the application tool (20, 20', 20") for renewed use in a subsequent application operation.

2. Method according to Claim 1, **characterized in that** the secure clamping of the film composite (5, 5') counteracting its tendency to curl up takes place by means of a vacuum, which can be applied to the base (27) formed as a suction box (19), the tab (10, 10') being kept such that it freely protrudes.

3. Method according to Claim 1, **characterized in that** the piece (76) of the tool-side adhesive strip (31, 31') that is used as a take-up medium and as a protective strip is completely renewed at intervals, i.e. after being used a number of times.

4. Method according to Claim 1, **characterized in that** the adhesive strip (31) that is used as a take-up medium and as a protective strip is stored virtually endlessly in the application tool (20, 20') and can also be collected in it (20, 20') again after use, which adhesive strip (31) is deflected by means of deflection rollers (37a, 37b) into the take-up plane (21) of the application tool (20, 20') and is renewed by advancement with respect to the piece (76) that is located in the take-up plane (21).

5. Method according to Claim 4, **characterized in that** the renewal of the piece (76) of the adhesive strip (31) that is located in the take-up plane (21) takes place incrementally after each application operation, but only partially each time, **in that** the piece (76) of the adhesive strip (31) that is located in the take-up plane (21) is respectively advanced only by a fraction of the stretched-out length.

6. Method according to Claim 5, **characterized in that** the piece (76) of the adhesive strip (31) that is stretched out in the take-up plane is incrementally advanced in the same direction in which the doctor knife (39) works.

7. Method according to Claim 1, **characterized in that**, at the beginning of the application operation, the adhesive-side protective strip (8) is only partially pulled off and the adhesive side of the lacquer film blank (6) is initially only partially exposed and **in that** the further pulling-off of the adhesive-side protective strip (8) or exposing of the adhesive side of the lacquer film blank (6) takes place simultaneously with the doctor-blading in a way corresponding to the progressive advancement of the doctor-blading of the lacquer film blank (6) onto the bodywork part (3, 4).

8. Method according to Claim 1, **characterized in that** the adhesive-side protective strip (8) is initially pulled off from the adhesive side of the lacquer film blank (6) in a stationary manner while enforcing a tight radius of curvature (r) of the protective strip (8) by using a movable tongue (46) as a counterstay.

9. Method according to Claim 1, **characterized in that** the lacquer film blank (6) is doctor-bladed onto the bodywork part (3, 4) only in a single direction and with only one doctor knife (39).

10. Method according to Claim 1, **characterized in that**, during the doctor-blading, a virtually constant distance (A) is maintained between the progressively advancing doctor knife (39) on the one hand and the likewise progressively advancing pulling-off point (69) of the adhesive-side protective strip (8) to be pulled off.

11. Method according to Claim 1, **characterized in that** the pulling-off of the adhesive-side protective strip (8) takes place by superposing a translating movement of a winding device (50, 54, 55), winding up the adhesive-side protective strip (8), on the one hand, which is moved at a speed coinciding with the speed of the doctor knife (39), and a winding movement of the winding device (50, 54, 55) on the other hand, the winding device (50, 54, 55) - considered on its own - winding up the pulled-off protective strip (8) likewise at a speed made to match the speed of the doctor knife (39).

12. Method according to Claim 1, **characterized in that** the end of the piece (76) of the adhesive strip (31) that is stretched in the take-up plane (21) of the application tool (20, 20', 20'') which the doctor knife (39) approaches toward the end of the doctor-blading operation is brought up close to the bodywork surface (3, 4) that is to be covered.

13. Method according to Claim 1, **characterized in that** the end of the piece (76) of the adhesive strip (31) that is stretched in the take-up plane (21) of the application tool (20, 20') which the doctor knife (39) approaches toward the end of the doctor-blading operation is allowed to continue sliding toward the end of the doctor-blading operation.

14. Method according to Claim 1, **characterized in that** doctor-blading is carried out with a linear pressure of at least 6 N/cm, preferably with an intensity of 7 to 17 N/cm.

15. Method according to Claim 1, **characterized in that**, for pulling off the piece (76) of the adhesive strip (31) that is stretched in the take-up plane (21) from the completely applied lacquer film blank (6), the application tool (20, 20', 20") is pivoted away from the bodywork surface (3, 4) about a virtual pivoting axis lying in the vicinity of an end of the piece (76) of the adhesive strip (31), preferably in the vicinity of the end on the start side of the piece, and/or is moved in the direction of the corresponding end of the lacquer film blank (6), in such a way that the piece (76) of the adhesive strip (31) that is stretched in the take-up plane (21) is pulled off from the applied lacquer film blank (6), beginning at the opposite end.

16. Device for automated application of self-adhesive lacquer film to a bodywork part securely held in a positionally defined manner,
ω̅ which lacquer film is presented as a prefabricated, elongated, and multi-ply film composite with a lacquer film blank contained therein in a positionally defined manner in the working region of the industrial robot for taking up by an application tool,
ω̅ which device substantially comprises the application tool which can be handled by the freely programmable industrial robot,
ω̅ the application tool has on its flat side, referred to hereafter as the "working side", a take-up plane, which is formed by two holding elements for the film composite arranged at a distance from each other, with which the latter is kept stretched and, in the stretched state, can be freely handled by the industrial robot,
ω̅ also arranged alongside one of the holding elements is a parallel-displaceable gripping tool, which on the one hand can be moved, ready to receive, up to the take-up plane for the purpose of grasping a tab of the film composite, on the other hand can be moved out of the starting position under the take-up plane and, once there, parallel to the take-up plane and parallel to itself for the purpose of pulling off an adhesive-side protective strip from the film composite,
ω̅ also arranged within the application tool is a doctor knife, which can be displaced with its working edge out of a waiting position, in which it is away from the take-up plane, into a working position, in which it is close to the take-up plane, and can be pressed on with a specific force and, in the working position, can be displaced in a rectilinear manner and parallel to the take-up plane,
in particular for performing the method according to Claim 1, wherein, for applying a merely two-ply film composite (5, 5') comprising the lacquer film blank (6) and an adhesive-side protective strip (8), which has only the one tab (10, 10'), which is directly adjacent the usable length (L) of the lacquer film blank (6), a hard, level base (27) is provided for the purpose of presenting in each case a film composite (5, 5') in the working region of the industrial robot (15), on which base the film composite (5, 5') is securely clamped in the planar state, counter to any tendency of the same to curl up, and the two holding elements of the application tool (20, 20'), arranged at a distance and forming the take-up plane (21), are formed as deflection rollers (37a, 37b), over which a virtually endless adhesive strip (31), stored on a brakable supply roller (30) within the application tool (20, 20'), is led away under tensile stress and is guided to a rotatably drivable take-up roller (33), likewise arranged within the application tool (20, 20'), it being possible, for the purpose of taking up the film composite (5, 5') in the application tool (20, 20'), for the part (76) of the adhesive strip (31) that is stretched between the two deflection rollers (37a, 37b) to be doctor-bladed by the tool-integrated doctor knife (39) onto the bare, exposed outer side of the presented film composite (5, 5').

17. Device according to Claim 16, **characterized in that** the level, hard base (27) for the positionally defined presentation in each case of a film composite (5, 5') is formed as a suction box (19, 19').

18. Device according to Claim 16, **characterized by** a supporting arm (44, 44'), which protrudes freely from the base (27) for the presentation of the film composite (5, 5'), securely holds the tab (10, 10') at its outermost end and supports or stretches the tab (10, 10') on the upper side and underside and at the sides in a freely accessible manner in such a way that it can be grasped by the parallel-displaceable gripping tool (50).

19. Device according to Claim 16, **characterized in that** the supply roller (30) is arranged on that side of the stretched piece (76) of the adhesive strip (32) on which the doctor-blading movement begins.

20. Device according to Claim 16, **characterized by** the totality of the following features:
ω̅ provided close to the hard base (27) for the presentation of the film composite (5, 5') is a counterstay tongue (46), which is secured at a vertical distance from the base (27) and parallel to it and can be pivoted or displaced parallel to the base (27) and is also displaceably guided (carriage 48) parallel to the longitudinal extent of the base (27) against a specific resistance (spring 49),
ω̅ the counterstay tongue (46) can be pivoted or pushed out of a rest position, leaving the base (27) clear, into a working position above the base (27), in which a rounded edge of the counterstay tongue (46) comes to lie transversely in relation to the longitudinal extent of the film composite (5, 5') and is in this case located in approximately the same position in relation to the end edge of the individual lacquer film blank (6) that is turned toward the tab (10, 10'),
ω̅ the adhesive-side protective strip (8) can be pulled off over the rounded edge of the counterstay tongue (46) by the tool-integrated, movable gripping tool (50), the counterstay tongue (46) being displaceable of its own accord against said resistance (spring 49, carriage 48) parallel to the longitudinal extent of the base (27).

21. Device according to Claim 16, **characterized in that** the gripping tool (50) is rotatably mounted (gear mechanism 54) and formed such that it is rotatably drivable (drive 55) and has over its longitudinal extent an approximately constant cross section, approximating a round shape, in such a way that it can be used at the same time as a winding core for a strip-shaped material gripped at the end by the gripping tool (50).

22. Device according to Claim 16 or 21, **characterized in that** the gripping tool (50) is formed as long-nose pliers which can move within the application tool (20, 20', 20") and have an upper nose part (51), arranged above the take-up plane (21) - at least in the ready-to-receive starting position - and a lower nose part (52), arranged beneath the take-up plane (21).

23. Device according to Claim 16, **characterized in that** the rotatably drivable gripping tool (50), serving at the same time as a winding core for the adhesive-side protective strip (8), can be specifically moved at the beginning of each application operation into such a rotational position that the gripping tool (50) is situated with its take-up surface (53) ready to receive parallel to the tab (10, 10') of the film composite (5, 5') taken up in the application tool (20, 20', 20'').

24. Device according to Claim 16, **characterized in that** the rotary drive (55) of the gripping tool (50), serving at the same time as a winding core, can be controlled during the winding operation in such a way with respect to the rotational speed that, irrespective of an increasing diameter of the roll (68) of the adhesive-side protective strip (8), a predeterminable, at least approximately constant, circumferential speed of the roll (68) can be maintained.

25. Device according to Claim 16, **characterized in that**, in the working position, during application, the doctor knife (39) and the gripping tool (50) are fixedly assigned to one another in the longitudinal direction (distance A) and can be displaced at a consistent speed.

26. Device according to Claim 16, **characterized in that** the doctor knife (39) consists of a felt of approximately 10 to 20 mm thickness and a density of 0.6 g/cm³ ± 10%.

27. Use of an adhesive strip (31, 31') that is kept stretched for the automated application of self-adhesive lacquer film blanks (6) to bodywork parts (3, 4) as a means for taking up a lacquer film composite (5, 5') from a base (27) and as an outer protective strip when the lacquer film blank (6) is pressed onto the bodywork part (3, 4).

## Revendications

1. Procédé d'application automatisée d'un film autocollant de vernis sur une pièce de carrosserie immobilisée en position définie, par recours à un robot industriel programmable doté d'un outil d'application, lequel film de vernis est préparé sous la forme d'un film composite stratifié allongé et préconfectionné, qui contient un flan de film de vernis de forme prédéterminée, placé en position définie dans la zone de travail du robot industriel pour être repris par l'outil d'application, et dans ce procédé, un bande de protection adhésif sur une face doté d'une patte de saisie installée à une extrémité est saisi par la patte de saisie au moyen d'un dispositif d'extraction intégré à l'outil, est détaché du flan de film maintenu tendu pour ainsi libérer son côté adhésif, et dans lequel en outre le flan de film de vernis maintenu tendu est orienté en position précise et à petite distance au-dessus de la pièce de carrosserie sur laquelle il doit être collé et est couché sur la pièce de carrosserie par le côté visible du film de vernis et en présence d'une bande de protection située sur le côté visible, au moyen d'un racloir mobile intégré à l'outil, la bande de protection située sur le côté visible étant ensuite détachée du film de vernis appliqué, dans lequel :
on utilise un film composite (5, 5') en seulement deux couches, constitué du flan (6) de film de vernis et de la bande de protection (8) du côté adhésif, le film composite (5, 5') présentant uniquement la patte de saisie (10, 10') immédiatement adjacente à la longueur utile (L) du flan (6) de film de vernis,
le film composite (5, 5') ainsi configuré est tendu sur une base plane et dure (27) en opposition à une tendance éventuelle du film composite (5, 5') à s'enrouler et est préparé de telle sorte que le côté visible dénudé du flan (6) dé film de vernis soit librement accessible,
le film composite (5, 5') ainsi préparé est repris par l'outil d'application (20, 20', 20") dont le plan de reprise (21) est maintenu à étroite distance du film composite (5, 5') ainsi amené, en couchant au moyen du racloir (39) intégré à l'outil un ruban adhésif (31, 31') maintenu tendu dans le plan de réception (21) de l'outil d'application (20, 20', 20'') comme moyen de reprise sur le côté arrière libéré du film composite (5, 5'),
après libération du côté adhésif du flan (6) de film adhésif, le flan (6) de film adhésif que contient le film composite (5, 5') repris est appliqué par couchage sur la pièce de carrosserie (3, 4), le ruban adhésif (31, 31') étant utilisé comme bande de protection et
ensuite, le ruban adhésif (31, 31') situé du côté de l'outil et utilisé comme support de reprise ainsi que comme bande de protection est enlevé du film de vernis (6) appliqué et est laissé dans l'outil d'application (20, 20', 20'') pour être réutilisé lors d'une opération ultérieure d'application.

2. Procédé selon la revendication 1, **caractérisé en ce que** la tension du film composite (5, 5') qui s'oppose à sa tendance à l'enroulement est réalisée par application d'une dépression qui peut être appliquée sur la base (27) configurée comme caisson aspirant (19), la patte de saisie (10, 10') étant maintenue de manière à en déborder librement.

3. Procédé selon la revendication 1, **caractérisé en ce que** la partie (76) du ruban adhésif (31, 31') située du côté de l'outil et utilisée comme support de reprise et comme bande de protection est renouvelée complètement par intervalles, c'est-à-dire après plusieurs utilisations.

4. Procédé selon la revendication 1, **caractérisé en ce que** le ruban adhésif (31) utilisé comme support de réception et comme bande de protection est mis en réserve quasi infinie dans l'outil d'application (20, 20') et, après utilisation, est également recueilli dans cet outil (20, 20'), le ruban adhésif (31) étant dévié au moyen de rouleaux de renvoi (37a, 37b) jusque dans le plan de réception (21) de l'outil d'application (20, 20') et étant renouvelé en étant avancé par rapport à la partie (76) située dans le plan de réception (21).

5. Procédé selon la revendication 4, **caractérisé en ce que** le renouvellement de la partie (76) du ruban adhésif (31) située dans le plan de réception (21) s'effectue de manière cadencée après chaque opération d'application, mais chaque fois uniquement en partie, en avançant la partie (76) du ruban adhésif (31) située dans le plan de réception (21) de seule une fraction de la longueur détachée.

6. Procédé selon la revendication 5, **caractérisé en ce que** la partie (76) du ruban adhésif (31) tendue dans le plan de réception est avancée de manière cadencée dans la même direction que celle dans laquelle travaille le racloir (39).

7. Procédé selon la revendication 1, **caractérisé en ce qu'**au début de l'opération d'application, la bande de protection (8) du côté adhésif n'est détachée que partiellement et le côté adhésif du flan (6) de film de vernis est d'abord libéré partiellement et **en ce que** la poursuite de l'extraction de la bande de protection (8) du côté adhésif ou de la libération du côté adhésif du flan (6) de film de vernis s'effectue en même temps que le couchage, en correspondance à l'avancement du couchage du flan (6) de film de vernis sur la pièce de carrosserie (3, 4).

8. Procédé selon la revendication 1, **caractérisé en ce que** la bande de protection (8) du côté adhésif est d'abord détachée de manière stationnaire du côté adhésif du flan (6) de film de vernis en forçant un petit rayon de courbure (r) de la bande de protection (8) en maintenant une lame mobile (46).

9. Procédé selon la revendication 1, **caractérisé en ce que** le flan (6) de film de vernis n'est couché sur la pièce de carrosserie (3, 4) dans une seule direction et avec un seul racloir (39).

10. Procédé selon la revendication 1, **caractérisé en ce que** pendant le couchage, une distance (A) approximativement constante est maintenue entre le racloir (39) qui s'avance, d'une part, et l'emplacement d'extraction (69), qui s'avance également, de la bande de protection (8) du côté adhésif qui doit être détachée.

11. Procédé selon la revendication 1, **caractérisé en ce que** l'extraction de la bande de protection (8) du côté adhésif s'effectue en superposant un déplacement de translation d'un dispositif d'enroulement (50, 54, 55) qui enroule la bande de protection (8) du côté adhésif, d'une part, et qui est déplacé à une vitesse qui correspond à la vitesse du racloir (39), et un déplacement d'enroulement du dispositif d'enroulement (50, 54, 55), d'autre part, le dispositif d'enroulement (50, 54, 55) enroulant intrinsèquement la bande de protection (8) détachée également à une vitesse accordée à la vitesse du racloir (39).

12. Procédé selon la revendication 1, **caractérisé en ce que** la fin de la partie (76) du ruban adhésif (31) tendue dans le plan de réception (21) de l'outil d'application (20, 20', 20'') et de laquelle s'approche le racloir (39) vers la fin de l'opération de couchage est rapprochée de la surface (3, 4) de la carrosserie à recouvrir.

13. Procédé selon la revendication 1, **caractérisé en ce que** l'extrémité de la partie (76) du ruban adhésif (31) tendue dans le plan de réception (21) de l'outil d'application (20, 20') et de laquelle le racloir s'approche vers la fin de l'opération de couchage est laissée libre de glisser vers la fin de l'opération de couchage.

14. Procédé selon la revendication 1, **caractérisé en ce que** le couchage s'effectue à une poussée linéaire d'au moins 6 N/cm et de préférence de l'ordre de 7 à 17 N/cm.

15. Procédé selon la revendication 1, **caractérisé en ce que** pour extraire la partie (76) du ruban adhésif (31) tendue dans le plan de réception (21) du flan (6) de film de vernis complètement appliqué, l'outil d'application (20, 20', 20'') est éloigné de la surface (3, 4) de la carrosserie par pivotement autour d'un axe virtuel de pivotement situé à proximité d'une extrémité de la partie (76) du ruban adhésif (31) et de préférence à proximité de l'extrémité de la partie située côté départ et/ou est déplacé en direction de l'extrémité correspondante du flan (6) de film de vernis, de telle sorte que la partie (76) du ruban adhésif (31) tendue dans le plan de réception (21) soit détachée du flan (6) de film de vernis appliqué en commençant par l'extrémité opposée.

16. Dispositif d'application automatisée d'un film adhésif de vernis sur une pièce de carrosserie immobilisée en position définie, dans lequel :
le film de vernis est préparé sous la forme d'un film composite stratifié allongé et préconfectionné, qui contient un flan de film de vernis de forme prédéterminée, placé en position définie dans la zone de travail du robot industriel pour être repris par l'outil d'application,
lequel dispositif est essentiellement constitué de l'outil d'application manipulable par le robot industriel programmable,
l'outil d'application présente sur son côté plat, appelé "côté de travail" dans ce qui suit, un plan de tension formé par deux organes de maintien du film composite disposés à distance l'un de l'autre et par lesquels ce dernier peut être maintenu tendu et manipulé librement par le robot industriel lorsqu'il est à l'état tendu,
un outil de saisie apte à coulisser en parallèle, qui d'une part peut être déplacé prêt à la réception sur le plan de réception pour saisir une patte de saisie du film composite, et d'autre part peut être déplacé depuis cette position initiale en dessous du plan de réception et de là parallèlement au plan de réception et parallèlement à lui-même pour enlever une bande de protection du côté adhésif du film composite, est en outre disposé au voisinage de l'un des organes de maintien,
un racloir dont l'arête de travail peut être déplacée depuis une position d'attente en recul par rapport au plan de réception jusque dans une position de travail située à proximité du plan de réception et peut être repoussée avec une force définie et être déplacée en ligne droite et parallèlement au plan de réception dans la position de travail est en outre disposé à l'intérieur de l'outil d'application,
en particulier en vue de la mise en oeuvre du procédé selon la revendication 1, pour appliquer un film composite (5, 5') en seulement deux couches, constitué du flan (6) de film de vernis et de la bande de protection (8) du côté adhésif, le film composite (5, 5') présentant uniquement la patte de saisie (10, 10') immédiatement adjacente à la longueur utile (L) du flan (6) de film de vernis, une base dure et plane (27) étant prévue pour amener un film composite (5, 5') dans la zone de travail du robot industriel (15) et sur laquelle le film composite (5, 5') peut être tendu en plan en opposition à son éventuelle tendance à l'enroulement, les deux organes de maintien de l'outil d'application (20, 20') disposés à distance l'un de l'autre et qui forment le plan de reprise (21) étant considérés comme rouleaux de renvoi (37a, 37b) par lesquels un ruban adhésif (31) quasi sans fin en réserve sur un rouleau de réserve (30) apte à être freiné et disposé à l'intérieur de l'outil d'application (20, 20') est écarté sous une contrainte de traction et est amené vers un rouleau de réception (33) apte à être entraîné en rotation et également disposé à l'intérieur de l'outil d'application (20, 20'), la partie (76) du ruban adhésif (31) tendue entre les deux rouleaux de renvoi (37a, 37b) étant raclée par le racloir (39) intégré à l'outil sur le côté extérieur nu et libéré du film composite (5, 5') amené, pour reprendre le film composite (5, 5') dans l'outil d'application (20, 20').

17. Dispositif selon la revendication 16, **caractérisé en ce que** la base (27) plane et dure qui sert à amener en position définie les films composites (5, 5') un à un est configurée comme caisson aspirant (19, 19').

18. Dispositif selon la revendication 16, **caractérisé par** un bras de soutien (44, 44') qui déborde librement de la base (27) pour amener le film composite (5, 5') et qui maintient la patte de saisie (10, 10') par son extrémité extérieure et qui soutient ou tend la patte de saisie (10, 10') sur son côté supérieur et son côté inférieur en la laissant librement accessible latéralement, de telle sorte que la patte puisse être saisie par l'outil de saisie (50) coulissant en parallèle.

19. Dispositif selon la revendication 16, **caractérisé en ce que** le rouleau de réserve (30) est disposé sur le côté de la partie tendue (76) du ruban adhésif (32) sur lequel le déplacement de couchage commence.

20. Dispositif selon la revendication 16, **caractérisé par** l'ensemble des caractéristiques suivantes :
- une lame de retenue (46) qui est maintenue parallèlement à la base (27) à distance verticale de cette dernière et apte à pivoter ou coulisser parallèlement à la base (27) tout en étant guidée à coulissement parallèle à la longueur de la base (27) en opposition à une résistance définie (ressort 49) (chariot 48) est prévue à proximité de la base dure (27) pour amener le film composite (5, 5'),
- la lame de retenue (46) peut être pivotée ou insérée depuis une position de repos qui libère la base (27) jusque dans une position de travail située au-dessus de la base (27) et dans laquelle un tranchant arrondi de la lame de retenue (46) vient se placer transversalement à la longueur du film composite (5, 5') et est situé alors sensiblement dans la même position que le bord d'extrémité du flan (6) de film de vernis tourné vers la patte de saisie (10, 10') et
- la bande de protection (8) du côté adhésif peut être enlevée par le bord arrondi de la lame de retenue (46) par l'outil mobile de saisie (50) intégré dans l'outil, la lame de retenue (46) pouvant coulisser de manière autonome parallèlement à la longueur de la base (27) et en opposition à ladite résistance (ressort 49, chariot 48).

21. Dispositif selon la revendication 16, **caractérisé en ce que** l'outil de saisie (50) est monté à rotation (transmission 54) et est configuré de manière à pouvoir être entraîné en rotation (entraînement 55) et présente sur sa longueur une section transversale sensiblement constante qui approche une forme circulaire de telle sorte qu'il peut être utilisé également comme mandrin d'enroulement pour un produit en forme de ruban saisi par une extrémité par l'outil de saisie (50).

22. Dispositif selon les revendications 16 ou 21, **caractérisé en ce que** l'outil de saisie (50) est configuré comme pince à long bec mobile à l'intérieur de l'outil d'application (20, 20', 20") qui présente une partie supérieure (51) de pince disposée au-dessus du plan de réception (21) au moins dans sa position initiale prête à la réception et une partie inférieure (52) de pince disposée en dessous du plan de reprise (21).

23. Dispositif selon la revendication 16, **caractérisé en ce que** l'outil de saisie (50) entraîné en rotation et qui sert en même temps de mandrin d'enroulement pour la bande de protection (8) du côté adhésif peut être amené de manière contrôlée au début de chaque opération d'application dans une position en rotation dans laquelle l'outil de saisie (50) est placé avec sa surface de reprise (53) prête à la reprise parallèle à la patte de saisie (10, 10') du film composite (5, 5') repris dans l'outil d'application (20, 20', 20'').

24. Dispositif selon la revendication 16, **caractérisé en ce que** l'entraînement en rotation (55) de l'outil de saisie (50) qui sert en même temps de mandrin d'enroulement pendant l'opération d'enroulement peut avoir sa vitesse de rotation commandée de telle sorte que compte non tenu de l'augmentation du diamètre du rouleau (68) de bande de protection (8) du côté adhésif, le rouleau (68) puisse être maintenu à une vitesse périphérique prédéterminée et au moins approximativement constante.

25. Dispositif selon la revendication 16, **caractérisé en ce que** dans la position de travail, le racloir (39) et l'outil de saisie (50) peuvent être déplacés lors de l'application en relation mutuelle fixe dans le sens de la longueur (distance A) et à une même vitesse.

26. Dispositif selon la revendication 16, **caractérisé en ce que** le racloir (39) est constitué d'un feutre d'une épaisseur d'environ 10 à 20 mm et d'une masse spécifique de 0,6 g/m³ ± 10 %.

27. Utilisation d'un ruban adhésif (31, 31') maintenu tendu lors de l'application automatique de flans (6) autocollants de film de vernis sur des pièces de carrosserie (3, 4), comme moyen de reprise d'un film composite de vernis (5, 5') par une base (27) et comme bande extérieure de protection lorsque le flan (6) de film de vernis est repoussé sur la pièce de carrosserie (3, 4).
